# EUROPEAN PATENT APPLICATION

(11) **EP 4 447 529 A1**
(43) Date of publication of application: **16.10.2024**
(21) Application number: 22918532.7
(22) Date of filing: 30.12.2022
(51) Int. Cl.: H04W 24/04, H04W 76/18

(54) **COMMUNICATION METHOD AND APPARATUS**

(30) Priority: 06.01.2022 CN 202210014284
(71) Applicant: Huawei Technologies Co., Ltd., Shenzhen, Guangdong 518129 (CN)
(72) Inventor: LI, Kuikui, Shenzhen, Guangdong 518129 (CN); SUN, Fei, Shenzhen, Guangdong 518129 (CN); SHI, Yulong, Shenzhen, Guangdong 518129 (CN); ZENG, Qinghai, Shenzhen, Guangdong 518129 (CN)
(74) Representative: Körber, Martin Hans
(86) International application number: PCT/CN2022/144294
(87) International publication number: WO 2023/131091

(57) **Abstract**

Embodiments of this application disclose a communication method and apparatus, to improve stability and reliability of data transmission in an integrated access and backhaul (Integrated Access and Backhaul, IAB) network. A first node is served by a first master cell group (Master Cell Group, MCG) and a first secondary cell group (Secondary Cell Group, SCG), and a child node of the first node is a second node. The method includes: The first node sends RLF indication information to the second node when the first SCG is for transmitting an F1 interface user plane service, no radio link failure (Radio Link Failure, RLF) occurs in the first MCG, and an RLF occurs in the first SCG.

## Description

This application claims priority to Chinese Patent Application No. 202210014284.4, filed with the China National Intellectual Property Administration on January 6, 2022 and entitled "COMMUNICATION METHOD AND APPARATUS", which is incorporated herein by reference in its entirety.

### TECHNICAL FIELD

This application relates to the communication technologies, and in particular, to a communication method and apparatus.

### BACKGROUND

To support service scenarios of enhanced mobile broadband (enhanced Mobile Broadband, eMBB) and ultra-reliable and low-latency communication (Ultra-Reliable and Low-latency Communication, URLLC), a 5th generation (5th Generation, 5G) new radio (New radio, NR) protocol standard uses higher frequency bands to obtain more bandwidth resources, including a sub-6 gigahertz (Gigahertz, GHz) frequency band and a millimeter-wave frequency band. Highfrequency signals have poor propagation characteristics, short wavelengths, small signal coverage, and are severely attenuated by obstacles. Therefore, a large quantity of small base stations need to be deployed densely. However, providing optical fiber backhaul for the large quantity of densely deployed small base stations needs high costs and has great difficulty in construction. Therefore, a cost-effective and convenient backhaul solution is required. In addition, when network coverage is provided in some remote areas to meet wide coverage requirements, optical fiber deployment is difficult and costly. Therefore, a flexible and convenient access and backhaul solution needs to be designed. A wireless transmission solution is used for an access link (Access Link) and a backhaul link (Backhaul Link, BL) of an integrated access and backhaul (Integrated Access and Backhaul, IAB) technology. This reduces a quantity of optical fibers to be deployed. In this way, NR cells can be flexibly and densely deployed, and wired transmission networks do not need to be proportionally densely deployed. The IAB technology can support various deployment scenarios, including supporting outdoor small base station deployments, indoor small base station deployments, and even mobile relaying, for example, on a bus or train.

Coverage of high-band signals is small. To ensure network coverage, IAB supports multi-hop networking and flexible expansion. There is at least one transmission path formed by a plurality of links between user equipment (User Equipment, UE) served by an IAB node (IAB node) and an IAB-donor (IAB-donor). Each transmission path may include the UE, one or more IAB nodes, an IAB-donor-distributed unit (IAB-donor-DU), and an IAB-donor-central unit (IAB-donor-CU). Each IAB node considers, as a parent node, an adjacent node that provides access and backhaul services for the IAB node. Correspondingly, each IAB node may be considered as a child node of the parent node of the IAB node.

To improve service transmission reliability, the IAB node may support dual connectivity (Dual Connectivity, DC), to cope with a possible exception of the backhaul link, for example, link interruption or blockage (blockage) and load fluctuation. Therefore, how to indicate a radio link failure for the IAB node with the dual connectivity, to perform radio link recovery (recovery) and ensure stable data transmission between the UE and the IAB-donor becomes an urgent technical problem to be resolved.

### SUMMARY

This application provides a communication method and apparatus, to improve stability and reliability of data transmission in an IAB network, and help reduce problems of data packet stacking, link congestion, and an excessively long latency on an IAB node.

According to a first aspect, a first node sends first RLF indication information to a second node when a radio link failure (Radio Link Failure, RLF) occurs on a backhaul link in a cell group that is of two cell groups and that is for transmitting an F1 interface user plane (F1-U) service, or when an RLF occurs on a backhaul link in a cell group that is of two cell groups and that is for transmitting an F1-U service and link recovery is performed, or when an RLF occurs on a backhaul link in a cell group that is of two cell groups and that is configured to transmit an F1 interface service based on a backhaul adaptation protocol (backhaul adaptation protocol, BAP) layer, or when an RLF occurs on a backhaul link in a cell group that is of two cell groups and that is configured to transmit an F 1 interface service based on a BAP and link recovery is performed. The first node is served by the two cell groups, and a child node of the first node is the second node.

The transmitting an F 1 interface service based on a BAP layer includes transmitting the F1-U service and/or an F1 interface control plane (F1-C) service based on the BAP layer. In a control plane-user plane (CP-UP) separation scenario in a DC scenario, the transmitting an F1 interface service based on a BAP layer may include transmitting the F 1-U service based on the BAP layer. The F1-C service may be transmitted based on an RRC layer (that is, the F1-C service over RRC). In a non CP-UP separation scenario in the DC scenario, the transmitting an F1 interface service based on a BAP layer may include transmitting the F1-U service and the F1-C service based on the BAP layer.

The first node with dual connectivity has two parent nodes, and the two parent nodes each provide a cell group for the first node. The backhaul link in the cell group in this application is a connection channel established between a mobile terminal (mobile terminal, MT) of the first node and a distributed unit (distributed unit, DU) of the parent node based on a cell group configured for any parent node of the first node, to backhaul or forward a data packet.

Therefore, the first node triggers sending of the first RLF indication information by detecting that the RLF occurs on the backhaul link in the cell group that is for transmitting the F1-U service, or by detecting that the RLF occurs on the backhaul link in the cell group that is configured to transmit the F1 interface service based on the BAP, so that stability and reliability of data transmission in an IAB network can be improved. In some scenarios, problems of data packet stacking, link congestion, and an excessively long latency of the second node caused by an unnecessary RLF indication may be reduced. For example, in the CP-UP separation scenario in the DC scenario, when the cell group for transmitting the F1 interface control plane (F1-C) service is an MCG and the RLF occurs, and the cell group for transmitting the F1-U service is an SCG and no RLF occurs, the first node does not immediately send the first RLF indication information to the second node based on a triggering manner of the first RLF indication information. In this way, an impact on a normal operation of the SCG for transmitting the F1-U service can be reduced. The second node may further continue to route data to the first node. This helps reduce the problems of the data packet stacking, the link congestion, and the excessively long latency of the second node.

In addition, in some scenarios, an RLF indication may be sent in time, so that the second node can trigger stopping of sending a data packet to the first node, or the second node can trigger a rerouting (rerouting) operation of the data packet routed by the first node. This helps reduce problems of data packet stacking, link congestion, and an excessively long latency of the first node. For example, when the cell group for transmitting the F1-U service is the SCG and the RLF occurs only in the SCG, the first node sends the first RLF indication information to the second node based on the triggering manner of the first RLF indication information, and the second node can trigger stopping of sending the data packet to the first node, or the second node can trigger the rerouting (rerouting) operation of the data packet routed by the first node. In this way, the problems of the data packet stacking, the link congestion, and the excessively long latency of the first node can be reduced.

When it is detected that the RLF occurs on the backhaul link in the cell group that is configured to transmit the F1 interface service based on the BAP, the sending of the first RLF indication information is triggered. When it is detected that the RLF occurs on backhaul links in all cell groups that are configured to transmit the F1 interface service based on the BAP, the first RLF indication information indicates that an RLF occurs on a node-granularity link between the first node and the second node, that is, indicates that the RLF occurs on an entire backhaul link between the first node and the second node.

According to a second aspect, an embodiment of this application provides a communication method, where a first node is served by a first master cell group (Master Cell Group, MCG) and a first secondary cell group (Secondary Cell Group, SCG), a child node of the first node is a second node, and the method may include: The first node sends first RLF indication information to the second node when the first SCG is for transmitting an F1 interface user plane service, no RLF occurs in the first MCG, and an RLF occurs in the first SCG.

In a possible design, when the first SCG is for transmitting the F1 interface user plane service, no RLF occurs in the first MCG, and the RLF occurs in the first SCG, that the first node sends first RLF indication information to the second node may include: The first node sends an RLF indication to the second node when the first SCG is for transmitting the F1 interface user plane service, no RLF occurs in the first MCG, and the RLF occurs in the first SCG and link recovery is performed.

In a possible design, that the first SCG is for transmitting an F1 interface user plane service may include: The first SCG transmits the F1 interface user plane service based on a backhaul adaptation protocol (backhaul adaptation protocol, BAP).

In a possible design, the first MCG is only for transmitting an F 1 interface control plane service, and the first RLF indication information indicates that an RLF occurs on a node-granularity link between the first node and the second node. That an RLF occurs on a node-granularity link means that an entire BH link between the first node and the second node is unavailable.

In a possible design, that the first RLF indication information indicates that an RLF occurs on a node-granularity link between the first node and the second node may include: The first RLF indication information indicates that the RLF occurs on the node-granularity link between the first node and the second node and link recovery is performed.

In a possible design, the first MCG is also for transmitting the F1 interface user plane service, and the first RLF indication information includes a first BAP address, a first routing identifier routing ID, or a first path identifier path ID.

In a possible design, the first node determines that all paths that pass through the first node to a destination node are unavailable, the first RLF indication information includes the first BAP address, and the first BAP address is a BAP address of the destination node; the first node determines that a path of the first path ID is unavailable in all paths that pass through the first node to a destination node, and the first RLF indication information includes the first path ID; or the first node determines that a path of the first routing ID is unavailable in all paths that pass through the first node to a destination node, and the first RLF indication information includes the first routing ID.

According to a third aspect, an embodiment of this application provides a communication method, where a first node is served by a first MCG and a first SCG, a child node of the first node is a second node, and the method may include: The first node sends first RLF indication information to the second node when the first MCG is for transmitting an F1 interface user plane service, and an RLF occurs in the first MCG and link recovery is performed.

In a possible design, that the first MCG is for transmitting an F1 interface user plane service may include: The first MCG is for transmitting the F1 interface user plane service based on a BAP.

In a possible design, the first SCG is only for transmitting an F1 interface control plane service, and the first RLF indication information indicates that an RLF occurs on a node-granularity link between the first node and the second node.

In a possible design, the first SCG is also for transmitting the F1 interface user plane service, no RLF occurs in the first SCG, and the first RLF indication information includes a first BAP address, a first routing identifier routing ID, or a first path identifier path ID.

In a possible design, the first node determines that all paths that pass through the first node to a destination node are unavailable, the first RLF indication information includes the first BAP address, and the first BAP address is a BAP address of the destination node; the first node determines that a path of the first path ID is unavailable in all paths that pass through the first node to a destination node, and the first RLF indication information includes the first path ID; or the first node determines that a path of the first routing ID is unavailable in all paths that pass through the first node to a destination node, and the first RLF indication information includes the first routing ID.

According to a fourth aspect, an embodiment of this application provides a communication method, where a first node is served by a first MCG and a first SCG, a child node of the first node is a second node, and the method may include:

The second node receives first RLF indication information sent by the first node, where the first RLF indication information includes a first backhaul adaptation protocol BAP layer address, or a first routing identifier routing ID, or a first path identifier path ID; the second node skips sending a first data packet to the first node based on the first RLF indication information, where a routing identifier carried in the first data packet is the first routing ID, or a path identifier in a routing identifier carried in the first data packet is the first path ID, or a BAP address in a routing identifier carried in the first data packet is the first BAP address.

According to a fifth aspect, this application provides a communication apparatus, including at least one processor and an interface, where the interface is configured to input and/or output a signal. For example, the interface is configured to: receive a signal from a communication apparatus other than the communication apparatus and transmit the signal to the processor, and/or send a signal from the processor to the communication apparatus other than the communication apparatus. The processor is configured to enable the communication apparatus to perform the foregoing method. For example, the processor implements any method in the first aspect, the second aspect, or the third aspect by using a logic circuit and/or executing program instructions.

Optionally, the apparatus may be a chip or an integrated circuit in the node in the first aspect, the second aspect, or the third aspect.

Optionally, the communication apparatus may further include at least one memory, and the memory stores the program instructions. The processor is coupled to the at least one memory, and is configured to execute a program to implement the foregoing method designs.

According to a sixth aspect, this application provides a communication apparatus. The apparatus has a component (component), a module (module), a unit (unit), or a means (means) for implementing the method in any one of the methods in the first aspect, the second aspect, or the third aspect, and any design thereof. The apparatus may be implemented by using hardware, software, firmware, or any combination thereof. For example, the apparatus may be implemented by hardware executing corresponding software. The hardware or software includes one or more corresponding units (modules) configured to implement the foregoing method designs, for example, includes a transceiver unit and a processing unit.

According to a seventh aspect, this application provides a computer-readable storage medium, where the computer-readable storage medium stores program instructions, and when the program instructions are run by a processor, any one of the methods in the first aspect, the second aspect, or the third aspect, and any design thereof are implemented.

According to an eighth aspect, this application provides a computer program product, where the computer program product includes program instructions, and when the program instructions are executed by a processor, any one of the methods in the first aspect, the second aspect, or the third aspect, and any design thereof are implemented.

According to a ninth aspect, this application further provides a chip, where the chip is configured to implement any one of the methods in the first aspect, the second aspect, or the third aspect, and any design thereof.

It should be understood that, technical solutions of the fourth to the eighth aspects of this application are consistent with those of the first to the third aspects of this application. Beneficial effects achieved by these aspects and corresponding feasible implementations are similar, and details are not described again.

### BRIEF DESCRIPTION OF DRAWINGS

The following describes in detail the solutions provided in this application with reference to the accompanying drawings. Features or content denoted by dashed lines in the figure may be understood as optional operations or optional structures in embodiments of this application.
FIG. 1 is a diagram of an IAB network communication system;
FIG. 2 is a diagram of a control plane protocol stack of an IAB network;
FIG. 3 is a diagram of a user plane protocol stack of an IAB network;
FIG. 4 is a diagram of a communication scenario;
FIG. 5 is a diagram of a dual-connectivity communication scenario;
FIG. 6 is a diagram of a communication architecture;
FIG. 7 is a diagram of a communication scenario;
FIG. 8 is a diagram of a cross-donor base station handover process;
FIG. 9 is a diagram of an indication manner of a radio link failure;
FIG. 10 is a diagram of a CP-UP separation scenario in an EN-DC scenario;
FIG. 11 is a diagram of a CP-UP separation scenario in an NR-DC scenario;
FIG. 12 is a diagram of an IAB network communication system in an EN-DC form of networking;
FIG. 13 is a diagram of an IAB network communication system in an NR-DC form of networking;
FIG. 14 is a flowchart of a radio link failure indication method;
FIG. 15 is a flowchart of a radio link failure indication method;
FIG. 16 is a flowchart of a radio link failure indication method;
FIG. 17A is a diagram of an RLF scenario;
FIG. 17B is a diagram of an RLF scenario;
FIG. 18 is a flowchart of a radio link failure indication method;
FIG. 19A is a diagram of an RLF scenario;
FIG. 19B is a diagram of an RLF scenario;
FIG. 20 is a flowchart of a radio link failure indication method;
FIG. 21 is a block diagram of a communication apparatus 2100; and
FIG. 22 is a block diagram of a communication apparatus 2200.

### DESCRIPTION OF EMBODIMENTS

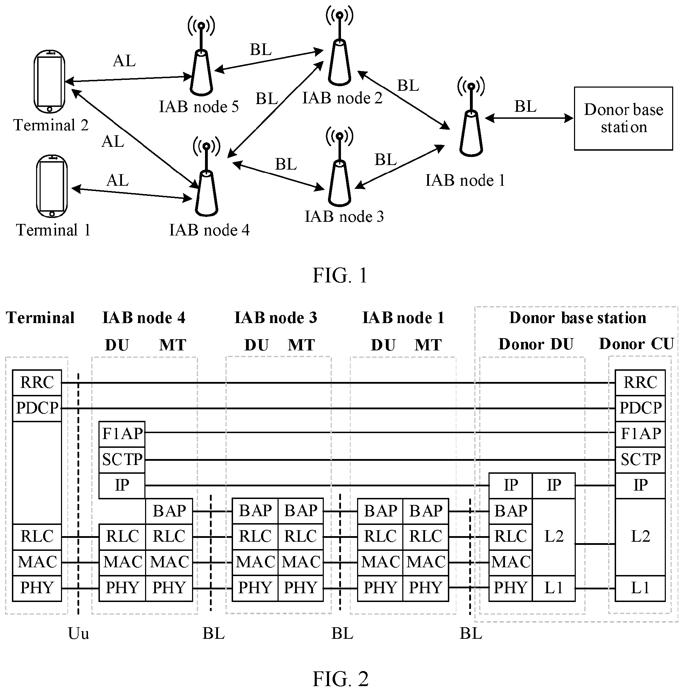

FIG. 1 is a diagram of an IAB network communication system according to this application. The communication system includes a terminal, an IAB node, and a donor base station. In this application, the "IAB network" is merely an example, and may be replaced with a "wireless backhaul network" or a "relay network". The "IAB node" is also merely an example, and may be replaced with a "wireless backhaul device" or a "relay node".

The donor base station (donor base station) may serve as a donor node of the IAB node. In this application, the donor base station may include but is not limited to: a next generation base station (generation NodeB, gNB), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (home evolved NodeB or home NodeB), a transmission point (transmission and reception point or transmission point), a road side unit (road side unit, RSU) having a base station function, a baseband unit (baseband unit, BBU), and a remote radio unit (Remote Radio Unit, RRU), an active antenna unit (active antenna unit, AAU), one or a group of antenna panels, a node having a base station function in a subsequent evolved system, or the like. The donor base station may be an entity, and may further include a central unit (central unit, CU) entity and at least one distributed unit (distributed unit, DU) entity. An interface between the CU and the DU may be referred to as an F1 interface. Two ends of the F1 interface are the CU and the DU. A peer end of the F1 interface of the CU is the DU, and a peer end of the F1 interface of the DU is the CU. The F1 interface may further include a control plane F1 interface (F1-C) and a user plane F1 interface (F1-U). In this application, the CU of the donor base station may be referred to as a donor CU for short, and the DU of the donor base station may be referred to as a donor DU for short.

In this application, the terminal is sometimes also referred to as user equipment (user equipment, UE), a mobile station, a terminal device, or the like. The terminal may be widely used in various scenarios such as device-to-device (device-to-device, D2D), vehicle-to-everything (vehicle-to-everything, V2X) communication, machine-type communication (machine-type communication, MTC), an Internet of Things (internet of things, IoT), virtual reality, augmented reality, industrial control, self-driving, remote medical, smart grid, smart furniture, smart office, a smart wearable device, smart transportation, and a smart city. The terminal may be a mobile phone, a tablet computer, a computer with a wireless transceiver function, a wearable device, a vehicle, an unmanned aerial vehicle, a helicopter, an airplane, a ship, a robot, a robot arm, a smart home device, or the like. The terminal may include but is not limited to: user equipment UE, a mobile station, a mobile device, a terminal device, a user agent, a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device, another processing device connected to a wireless modem, a vehicle-mounted device, a wearable device (such as a smart watch, a smart band, and smart glasses), smart furniture or home appliances, a vehicle device in vehicle-to-everything (vehicle-to-everything, V2X), a terminal device having a relay function, customer premises equipment (customer premises equipment, CPE), an IAB node (which is specifically an MT of the IAB node or an IAB node serving as a terminal), and the like. A specific name and an implementation form of the terminal are not limited in this application.

In this application, the IAB node may include at least one mobile terminal (mobile terminal, MT) and at least one distributed unit DU (distributed unit, DU). The IAB node may be an entity. For example, the IAB node includes at least one MT function and at least one DU function. The IAB node may alternatively include a plurality of entities. For example, the IAB node includes at least one MT entity and at least one DU entity. The MT entity and the DU entity may communicate with each other, for example, communicate with each other by using a network cable. When the IAB node is oriented to a parent node (where the parent node may be a donor base station or another IAB node) of the IAB node, the IAB node may serve as a terminal, for example, used in various scenarios in which the foregoing terminal is used, that is, a terminal role of the IAB node. In this case, the MT function or the MT entity provides the terminal role for the IAB node. When the IAB node is oriented to a child node (where the child node may be another IAB node or a terminal) of the IAB node, the IAB node may serve as a network device, that is, a network device role of the IAB node. In this case, the DU function or the DU entity provides the network device role for the IAB node. In this application, the MT of the IAB node may be referred to as an IAB-MT for short, and the DU of the IAB node may be referred to as an IAB-DU for short. The IAB node may be connected to the donor base station, or may be connected to the donor base station via another IAB node.

The IAB network supports multi-hop networking and multi-connection networking to ensure reliability of service transmission. The IAB node considers an IAB node that provides a backhaul service for the IAB node as a parent node. Correspondingly, the IAB node may be considered as a child node of the parent node of the IAB node. The terminal may alternatively consider an IAB node accessed by the terminal as a parent node. Correspondingly, the IAB node may alternatively consider the terminal accessed by the IAB node as a child node. The IAB node may consider a donor base station accessed by the IAB node as a parent node. Correspondingly, the donor base station may alternatively consider the IAB node accessed by the donor base station as a child node. As shown in FIG. 1, a parent node of an IAB node 1 includes a donor base station. The IAB node 1 is also a parent node of an IAB node 2 or an IAB node 3. A parent node of a terminal 1 includes an IAB node 4. A child node of the IAB node 4 includes the terminal 1 or a terminal 2. An IAB node directly accessed by a terminal may be referred to as an access IAB node. The IAB node 4 in FIG. 1 is an access IAB node of the terminal 1 and the terminal 2. An IAB node 5 is an access IAB node of the terminal 2. A node on an upstream transmission path from the IAB node to the donor base station may be referred to as an upstream node (upstream node) of the IAB node. The upstream node may include a parent node, a parent node (or referred to as a grandparent node) of the parent node, or the like. For example, the IAB node 1 and the IAB node 2 in FIG. 1 may be referred to as upstream nodes of the IAB node 5. A node on a downstream transmission path from the IAB node to the terminal may be referred to as a downstream node (downstream node) or a descendant node (descendant node) of the IAB node. The downstream node or the descendant node may include a child node, a child node (or referred to as a grandchild node) of the child node, a terminal, or the like. For example, the terminal 1, the terminal 2, the IAB node 2, the IAB node 3, the IAB node 4, or the IAB node 5 in FIG. 1 may be referred to as a downstream node or a descendant node of the IAB node 1. For another example, the IAB node 4 and the IAB node 5 in FIG. 1 may be referred to as downstream nodes or descendant nodes of the IAB node 2. The terminal 1 in FIG. 1 may be referred to as a downstream node or a descendant node of the IAB node 4. Each IAB node needs to maintain a backhaul link (backhaul link, BL) oriented to a parent node. If the child node of the IAB node is the terminal, the IAB node further needs to maintain an access link (access link, AL) between the IAB node and the terminal. As shown in FIG. 1, a link between the IAB node 4 and the terminal 1 or the terminal 2 includes the AL. A link between the IAB node 4 and the IAB node 2 or the IAB node 3 includes the BL.

An upstream data packet sent by the terminal to the donor base station may be transmitted to the donor base station via one or more IAB nodes. To be specific, a target node of upstream data between the terminal and the donor base station may be the donor base station. A downstream data packet sent by the donor base station to the terminal may be sent to the access IAB node of the terminal via one or more IAB nodes, and then the downstream data packet is sent by the access IAB node to the terminal. To be specific, a target node of downstream data between the terminal and the donor base station may be the access IAB node. For example, there are two available paths for data transmission between a terminal 1 and the donor base station: Path 1: the terminal 1←→the IAB node 4←→the IAB node 3←→the IAB node 1←→the donor base station, and Path 2: the terminal 1←→the IAB node 4←→the IAB node 2←→the IAB node 1←→the donor base station. There are three available paths for data transmission between a terminal 2 and the donor base station: Path 1: the terminal 2←→the IAB node 4<--4the IAB node 3 <--4the IAB node 1←→the donor base station, Path 2: the terminal 2 <-- 4the IAB node 4 <-- 4the IAB node 2←→the IAB node 1←→the donor base station, and Path 3: the terminal 2←→the IAB node 5←→the IAB node 2←→the IAB node 1←→the donor base station. It may be understood that, in an IAB network, one transmission path between the terminal and the donor base station may include one or more IAB nodes. Each IAB node needs to maintain a wireless backhaul link (backhaul link, BL) oriented to a parent node. If the child node of the IAB node is the terminal, a radio access link (access link, AL) exists between the IAB node and the terminal. As shown in FIG. 1, on the path 1 between the terminal 1 and the donor base station, the terminal 1 accesses the IAB node 4 over the AL, the IAB node 4 is connected to the IAB node 3 over the BL, the IAB node 3 is connected to the IAB node 1 over the BL, and the IAB node 1 is connected to the donor base station over the BL.

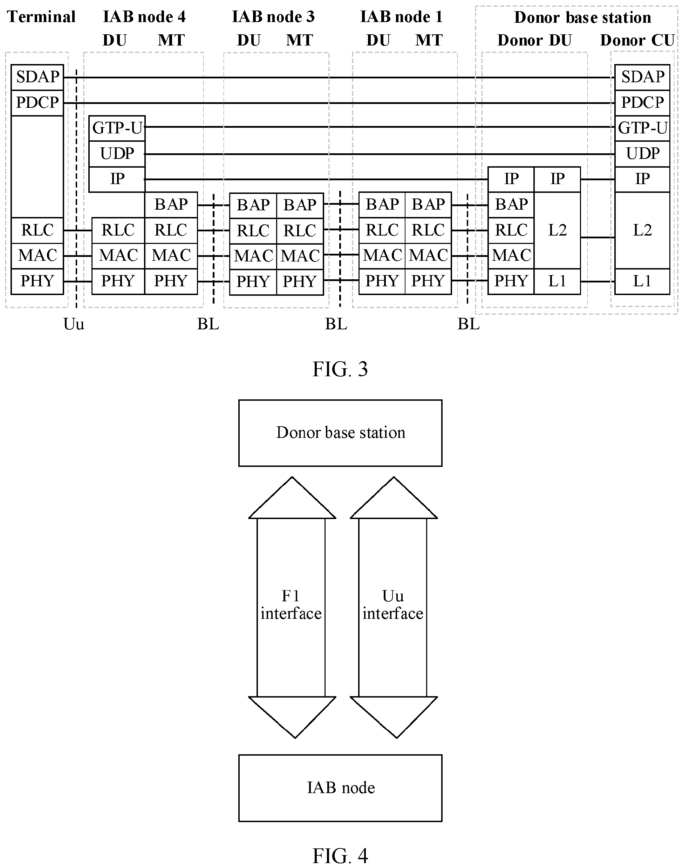

FIG. 2 and FIG. 3 are respectively a diagram of a control plane protocol stack and a diagram of a user plane protocol stack of an IAB network according to embodiments of this application. Donor base stations in FIG. 2 and FIG. 3 may include a donor CU function and a donor DU function (where in this case, the donor base station is an entity), or may include a donor CU entity and a donor DU entity (where in this case, the donor base station is divided into two entities). As shown in FIG. 2 or FIG. 3, peer protocol layers between a donor DU and a donor CU include an IP layer, a layer 2 (layer 2, L2), and a layer 1 (layer 1, L1). The L1 and the L2 may be referred to as protocol stack layers in a wired transmission (for example, optical fiber transmission) network. For example, the L1 may be a physical layer, and the L2 may be a data link layer. Backhaul links (BLs) are established between an IAB node 4 and an IAB node 3, between the IAB node 3 and an IAB node 1, and between the IAB node 1 and the donor DU. Peer protocol stacks at two ends of the BL may include a backhaul adaptation protocol (backhaul adaptation protocol, BAP) layer, a radio link control (radio link control, RLC) layer, a media access control (media access control, MAC) layer, and a physical (physical, PHY) layer.

As shown in FIG. 2, there is an interface between a terminal and the donor base station, and sometimes the interface is also an air interface. For example, the air interface may be referred to as a Uu interface. One end of the Uu interface is located at the terminal, and the other end is located at the donor base station. Peer control plane protocol stacks at two ends of the Uu interface include a radio resource control (radio resource control, RRC) layer, a packet data convergence protocol (packet data convergence protocol, PDCP) layer, an RLC layer, a MAC layer, and a PHY layer. A protocol layer included in the Uu interface control plane protocol stack may also be referred to as a control plane access stratum (access stratum, AS). If the donor base station includes the donor CU entity and the donor DU entity, a control plane protocol stack of the Uu interface at the donor base station end may be separately located at the donor DU and the donor CU. For example, the PHY layer, the MAC layer, and the RLC layer are located at the donor DU, and the RRC layer and the PDCP layer are located at the donor CU.

There is an interface, for example, referred to as an F1 interface, between the DU of the IAB node (that is, the IAB node 4 in FIG. 2) accessed by the terminal and the donor base station. One end of the F1 interface is located at the IAB node 4, and the other end is located at the donor base station. A peer end of the F1 interface of the donor base station (for example, may be the donor CU) is the IAB node (which may be specifically the DU of the IAB node), and a peer end of the F1 interface of the IAB node (which may be specifically the DU of the IAB node) is the donor base station (which may be specifically the donor CU). Peer control plane protocol stacks at two ends of the F1 interface include an F1 application protocol (F1 application protocol, F1AP) layer, a stream control transmission protocol (stream control transmission protocol, SCTP) layer, and an IP layer. The donor base station may include the donor CU entity and the donor DU entity. A control plane protocol stack of the F1 interface at the donor base station end may be located at the donor CU. For example, the donor CU includes the F1AP layer, the SCTP layer, and the IP layer. The control plane protocol stack of the F1 interface at the donor base station end may alternatively be separately located at the donor CU and the donor DU. For example, the donor CU includes the F1AP layer and the SCTP layer, and the donor DU includes the IP layer. As shown in FIG. 3, peer user plane protocol stacks at two ends of a Uu interface between a terminal and the donor base station include a service data adaptation protocol (service data adaptation protocol, SDAP) layer, a PDCP layer, an RLC layer, a MAC layer, and a PHY layer. A protocol layer included in a user plane protocol stack of the Uu interface may also be referred to as a user plane access stratum (AS). If the donor base station includes the donor CU entity and the donor DU entity, a user plane protocol stack of the Uu interface at the donor base station end may be separately located at the donor DU and the donor CU. For example, the PHY layer, the MAC layer, and the RLC layer are located at the donor DU, and the SDAP layer and the PDCP layer are located at the donor CU.

Peer user plane protocol layers at two ends of an F1 interface between a DU of the IAB node 4 and the donor base station include a general packet radio service tunnelling protocol for the user plane (general packet radio service tunnelling protocol for the user plane, GTP-U) layer, a user datagram protocol (user datagram protocol, UDP) layer, and an IP layer. The donor base station may include the donor CU entity and the donor DU entity. A user plane protocol stack of the F1 interface at the donor base station end may be located at the donor CU. For example, the donor CU includes the GTP-U layer, the UDP layer, and the IP layer. A user plane protocol stack of the F1 interface at the donor base station end may alternatively be separately located at the donor CU and the donor DU. For example, the donor CU includes the GTP-U layer and the UDP layer, and the donor DU includes the IP layer.

On a control plane, an RRC message of the terminal is encapsulated by an access IAB node in the F1AP message for transmission. Specifically, in an upstream direction, the terminal encapsulates the RRC message in a PDCP protocol data unit (protocol data unit, PDU), and sends the PDCP protocol data unit to the DU of the IAB node 4 after processing is sequentially performed at the RLC layer, the MAC layer, and the PHY layer. The DU of the IAB node 4 obtains the PDCP PDU after processing is sequentially performed at the PHY layer, the MAC layer, and the RLC layer, encapsulates the PDCP PDU in the F1AP message, and obtains an IP packet after processing is sequentially performed at an SCTP layer and the IP layer. The DU of the IAB node 4 sends the IP packet to an MT of the IAB node 4 through an internal interface. The MT of the IAB node 4 sends the IP packet to a DU of the IAB node 3 after processing is sequentially performed at the BAP layer, the RLC layer, the MAC layer, and the PHY layer. The DU of the IAB node 3 obtains the IP packet after processing is sequentially performed at the PHY layer, the MAC layer, the RLC layer, and the BAP layer. The DU of the IAB node 3 sends the IP packet to an MT of the IAB node 3 through an internal interface, and then the MT of the IAB node 3 sends the IP packet to a DU of the IAB node 1 by using an operation similar to that of the MT of the IAB node 4. Then, the DU of the IAB node 1 sends the IP packet to an MT of the IAB node 1 by using an operation similar to that of the DU of the IAB node 3. Similarly, the MT of the IAB node 1 sends the IP packet to the donor DU. After obtaining the IP packet through parsing, the donor DU sends the IP packet to the donor CU. The donor CU obtains the RRC message of the terminal after processing is sequentially performed on the IP packet at the SCTP layer, the F1AP layer, and the PDCP layer. Operations in a downstream direction are similar. Details are not described herein again.

On a user plane, a data packet of the terminal is encapsulated in a PDCP PDU (PDCP PDU), and is sent to an access IAB node after processing is sequentially performed at the RLC layer, the MAC layer, and the PHY layer. The access IAB node encapsulates the received PDCP PDU in a GTP-U tunnel between the access IAB node and the donor CU for transmission. The GTP-U tunnel is established on an F1-U interface. For a specific process of transferring the data packet of the terminal, refer to the foregoing process of transferring the RRC message on the control plane.

In addition, in FIG. 2 and FIG. 3, when a terminal accesses the donor DU, an interface between the donor DU and the donor CU may also include an F1 interface. Peer control plane protocol stacks at two ends of the F1 interface include the F1AP layer, the SCTP layer, and the IP layer. Peer user plane protocol stacks at two ends of the F1 interface include the GTP-U layer, the UDP layer, and the IP layer. When a terminal accesses the IAB node 1 or the IAB node 3, an F1 interface may also be included between the IAB node 1 or the IAB node 3 and the donor base station. For descriptions of the F1 interface, refer to the descriptions of the F1 interface between the DU of the IAB node 4 and the donor base station.

When the terminal refers to an MT function or an MT entity of the IAB node, or an IAB node serving as the terminal, the protocol stack of the terminal shown in FIG. 2 or FIG. 3 is a protocol stack of an MT function or MT entity of an IAB node or a protocol stack when an IAB node serves as the terminal.

When accessing an IAB network, the IAB node can function as the terminal. In this case, an MT of the IAB node has the protocol stack of the terminal. There is an air interface (Uu interface) protocol stack between the IAB node and the donor base station. The protocol stack of the terminal in FIG. 2 and FIG. 3 includes the RRC layer or the SDAP layer, the PDCP layer, the RLC layer, the MAC layer, and the PHY layer. On the control plane, an RRC message of the IAB node is encapsulated in the F1AP message by a parent node of the IAB node for transmission. On the user plane, a data packet of the IAB node is encapsulated in the PDCP protocol data unit (protocol data unit, PDU) and sent to a parent node of the IAB node. The parent node of the IAB node encapsulates the received PDCP PDU in a GTP-U tunnel of an F1 interface between the parent node of the IAB node and the donor CU for transmission. In addition, after the IAB node accesses the IAB network, the IAB node may still function as a common terminal. For example, the IAB node may transmit a data packet of the IAB node to the donor base station, for example, a data packet of an operations, administration and maintenance (operations, administration and maintenance, OAM) network element and a measurement report.

It should be noted that one IAB node may have one or more roles in the IAB network. For example, the IAB node may serve as the terminal, or may serve as the access IAB node (for example, a protocol stack of the IAB node 4 in FIG. 2 and FIG. 3) or an intermediate IAB node (for example, a protocol stack of the IAB node 1 or the IAB node 3 in FIG. 2 and FIG. 3). The IAB node may use protocol stacks corresponding to different roles for different roles. When the IAB node has a plurality of roles in the IAB network, the IAB node may have a plurality of protocol stacks at the same time. The protocol stacks may share some same protocol layers, for example, share a same RLC layer, a same MAC layer, and a same PHY layer.

FIG. 4 is a diagram of a communication scenario. As shown in FIG. 4, a donor base station (Donor base station) and an IAB node are included. The donor base station may include a donor CU (Donor CU) and at least one donor DU (Donor DU). A communication interface between the donor base station and the IAB node may include an air interface (a Uu interface) and an F1 interface. For example, there is the air interface (Uu interface) between an MT of the IAB node and the donor base station, and there is the F 1 interface between a DU of the IAB node and the donor base station.

An IP address of the IAB node may be allocated to the IAB node by the donor DU or a network management device. An IP address of the donor CU may also be allocated by the network management device. In this application, the network management device may include an operations, administration and maintenance (operations, administration and maintenance, OAM) network element, an element management system (element management system, EMS), a network management system (network management system, NMS), or the like.

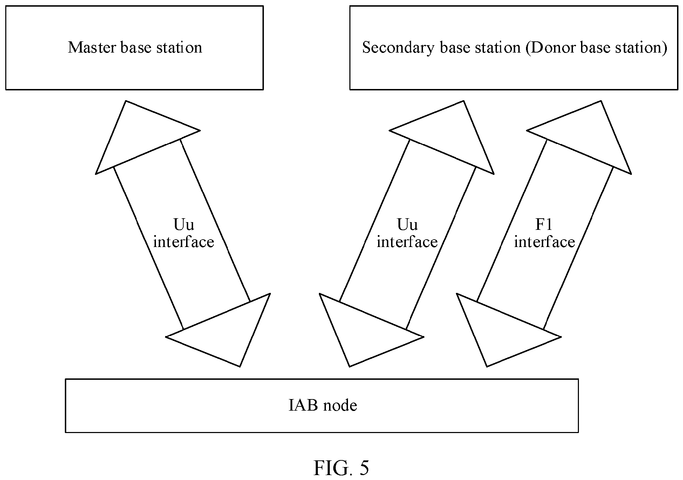

FIG. 5 is a diagram of a dual-connectivity communication scenario. As shown in FIG. 5, a master base station (master base station), a secondary base station (secondary base station), and an IAB node are included. A donor base station of the IAB node is the secondary base station. A communication interface between the master base station and the IAB node includes an air interface (a Uu interface). A communication interface between the secondary base station and the IAB node includes the Uu interface and an F1 interface.

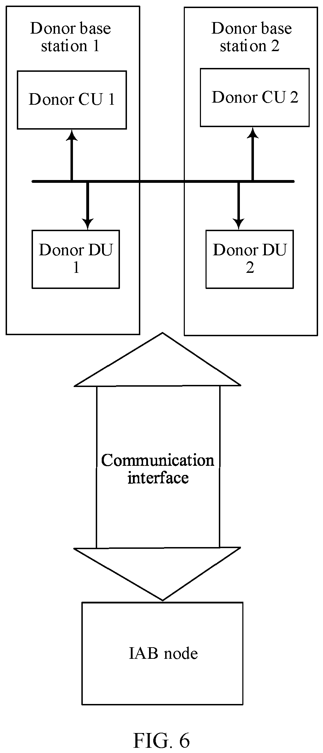

FIG. 6 is a diagram of a communication architecture. As shown in FIG. 6, a donor base station 1 includes a donor CU 1 (Donor CU 1) and a donor DU 1 (Donor DU 1). A donor base station 2 includes a donor CU 2 (Donor CU 2) and a donor DU 2 (Donor DU 2). There is a communication interface between an IAB node and the donor base station 1 or the donor base station 2. For example, the communication interface between the IAB node and the donor base station 1 or the donor base station 2 may include a Uu interface and/or an F1 interface. There is also a communication interface between the donor base station 1 and the donor base station 2. The donor CU 1 and the donor CU 2 may communicate with each other, for example, communicate with each other through an X2 or Xn interface. The donor CU 1 and the donor DU 2, and the donor CU 2 and the donor DU 1 may also communicate with each other, for example, by using an IP network. It may be understood that, the communication architecture shown in FIG. 6 may further include a downstream node or a descendant node of the IAB node. An upstream node of the IAB node may be further included between the IAB node and the donor base station.

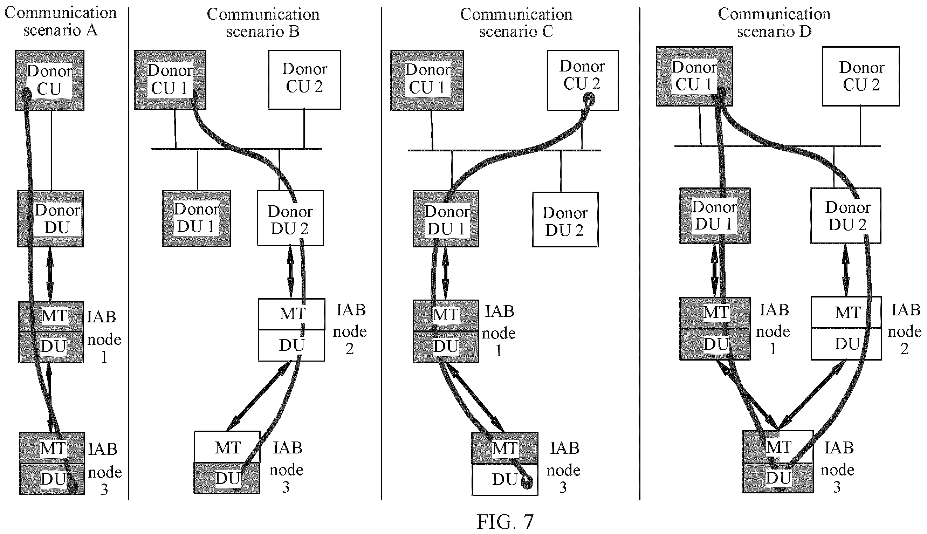

FIG. 7 is a diagram of a possible communication scenario. As shown in FIG. 7, an IAB node includes MT and DU parts (where in this case, the IAB node is divided into two entities), or MT and DU functions (where in this case, the IAB node is an entity). A donor base station includes a donor CU entity and a donor DU entity (where in this case, the donor base station is divided into two entities), or donor CU and donor DU functions (where in this case, the donor base station is still a whole). An upstream node IAB node 2 (that is, a parent node of an IAB node 3) further exists between the IAB node 3 and the donor base station. In FIG. 7, a thick curve indicates a possible path for communication at an F 1 interface that is between the IAB node and a donor base station 1 or a donor base station 2 in each scenario. It may be understood that, in FIG. 7, another upstream node of the IAB node 3 may be further included between the IAB node 3 and the IAB node 2, or between the IAB node 3 and an IAB node 1. In FIG. 7, another downstream node or descendant node of the IAB node 3 may be further included. In FIG. 7, the IAB node 1 may not exist. To be specific, the IAB node 3 may be directly connected to the donor base station 1. Alternatively, the IAB node 2 may not exist. To be specific, the IAB node 3 may be directly connected to the donor base station 2. The following describes several communication scenarios shown in FIG. 7.

Communication scenario A: When a donor base station in the communication scenario A in FIG. 7 is the donor base station 1 (to be specific, a donor CU is a donor CU 1, and a donor DU is a donor DU 1), there are a Uu interface and an F1 interface between the IAB node 3 and the donor base station 1. Communication at the F1 interface that is between the IAB node 3 and the donor base station 1 needs to pass through the donor DU 1.

When the donor base station in the communication scenario A in FIG. 7 is the donor base station 2 (the donor CU is a donor CU 2, and the donor DU is a donor DU 2), there are a Uu interface and an F1 interface between the IAB node 3 and the donor base station 2. Communication at the F1 interface that is between the IAB node 3 and the donor base station 2 needs to pass through the donor DU 2.

Communication scenario B: There is a Uu interface between the IAB node 3 and the donor base station 2 (including a donor CU 2 and a donor DU 2), and there is an F1 interface between the IAB node 3 and the donor base station 1. Communication at the F1 interface that is between the IAB node 3 and the donor base station 1 needs to pass through a donor DU 2.

Communication scenario C: There is a Uu interface between the IAB node 3 and the donor base station 1 (including a donor CU 1 and a donor DU 1), and there is an F1 interface between the IAB node 3 and the donor base station 2. In the communication scenario C, there may be the F1 interface between the IAB node 3 and the donor base station 1, or there may be no F1 interface (which may also be referred to as that no F1 interface is established between the IAB node 3 and the donor base station 1). Communication at the F1 interface that is between the IAB node and the donor base station 2 needs to pass through the donor DU 1.

Communication scenario D (which may also be referred to as a dual-connectivity scenario): There is a Uu interface between the IAB node 3 and the donor base station 1 (including a donor CU 1 and a donor DU 1), and there is a Uu interface between the IAB node and the donor base station 2. There is an F1 interface between the IAB node 3 and the donor base station 1. Communication at the F1 interface that is between the IAB node 3 and the donor base station 1 may pass through the donor DU 1 or a donor DU 2. In other words, the donor base station 1 may choose to perform communication at the F1 interface with the IAB node 3 via the donor DU 1 and/or the donor DU 2.

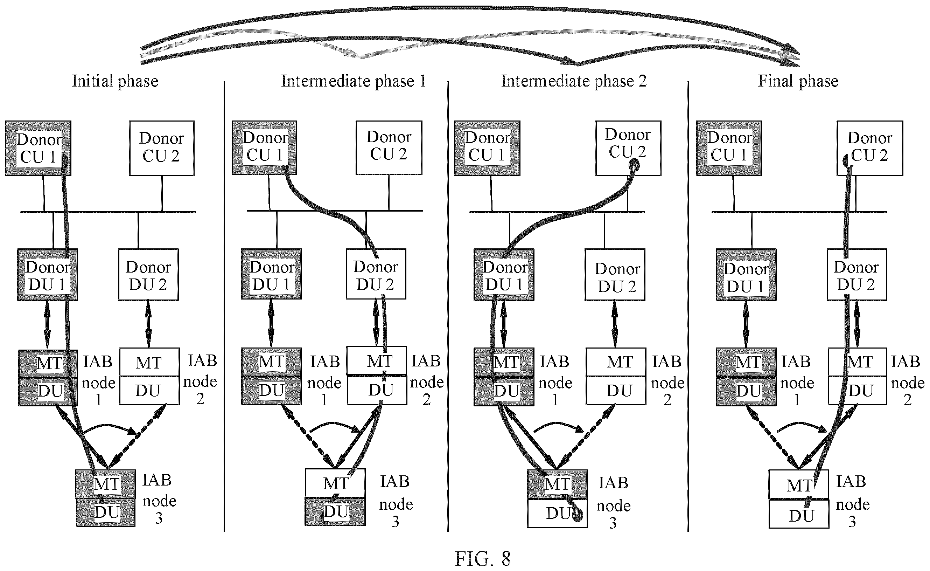

The communication scenarios A, B, C, and D of the IAB node 3 may be mutually converted. For example, in a process in which cross-donor base station handover is performed on the IAB node 3, switching from the communication scenario A to the communication scenario B, or switching from the communication scenario A to the communication scenario C may be included. In this case, the donor base station 1 may be referred to as a source donor base station (source donor base station, S-donor), and the donor base station 2 may be referred to as a target donor base station (target donor base station, T-donor). The S-donor may further include an S-donor CU 1 and an S-donor DU 1. The T-donor may further include a T-donor CU 2 and a T-donor DU 2. A process in which cross-donor base station handover is performed on an IAB node may be shown in FIG. 8.

FIG. 8 is a diagram of a cross-donor base station handover process. Before performing the cross-donor base station handover, an IAB node 3 may be in an initial phase. For descriptions of the initial phase, refer to the foregoing descriptions of the communication scenario A.

A possible cross-donor base station handover process includes: After the IAB node 3 receives a message that is from a donor base station 1 and that indicates the IAB node 3 to be handed over from the donor base station 1 to a donor base station 2, an MT of the IAB node 3 is first handed over to the donor base station 2 (that is, an air interface is handed over from the donor base station 1 to the donor base station 2), and a DU of the IAB node 3 still maintains an F1 interface (that is, the F1 interface is not handed over) between the IAB node 3 and the donor base station 1. In this case, the IAB node is in an intermediate phase 1. For communication between the IAB node 3 in the intermediate phase 1 and the donor base station 1 or the donor base station 2, refer to the foregoing descriptions of the communication scenario B. Optionally, the IAB node 3 in the intermediate phase 1 may continue to hand over the F1 interface to the donor base station 2 (to be specific, disconnect the F1 interface between the IAB node 3 and the donor base station 1, and establish an F1 interface between the IAB node 3 and the donor base station 2). In this case, the IAB node enters a final phase.

Another possible cross-donor base station handover process includes: The IAB node 3 establishes an F1 interface with a donor base station 2 based on a received indication information, and an MT of the IAB node 3 further maintains a Uu interface between the IAB node 3 and a donor base station 1 (that is, the Uu interface is not handed over). In this case, the IAB node is in an intermediate phase 2. The indication information may be from the donor base station 1, and indicates the IAB node 3 (which may be specifically a DU of the IAB node 3) to establish the F1 interface with the donor base station 2. For example, the indication information carries an IP address of a donor CU 2. For communication between the IAB node 3 in the intermediate phase 2 and the donor base station 1 or the donor base station 2, refer to the foregoing descriptions of the communication scenario C. Optionally, after the IAB node 3 receives a message that is from the donor base station 1 and that indicates the IAB node 3 to be handed over from the donor base station 1 to the donor base station 2, the IAB node 3 in the intermediate phase 2 may continue to hand over the Uu interface to the donor base station 2 (to be specific, disconnect the Uu interface between the MT of the IAB node 3 and the donor base station 1, and establish a Uu interface between the MT of the IAB node 3 and the donor base station 2). In the communication scenario C or the intermediate phase 2, if there is the F1 interface between the IAB node 3 and the donor base station 1, in this case, the F1 interface between the IAB node 3 and the donor base station 1 may be disconnected. In this case, the IAB node enters a final phase.

In this application, establishing the interface may include establishing a connection and/or a bearer on the interface. For example, establishing the Uu interface may include at least one of establishing an RRC connection, establishing an SRB, and establishing a DRB. Establishing the F1 interface may include establishing an F1 connection. Disconnecting the interface may include disconnecting a connection and/or a bearer on the interface. For example, disconnecting the Uu interface may include at least one of disconnecting the RRC connection, disconnecting the SRB, and disconnecting the DRB. Disconnecting the F1 interface may include disconnecting the F1 connection.

For another example, the IAB node 3 may further switch from the communication scenario A or the communication scenario B to the dual-connectivity communication scenario (the communication scenario D). In this case, the donor base station 1 may be referred to as a master donor base station (master donor base station, M-donor), and the donor base station 2 may be referred to as a secondary donor base station (secondary donor base station, S-donor). The M-donor may further include an M-donor CU 1 and an M-donor DU 1. The S-donor may further include an S-donor CU 2 and an S-donor DU 2.

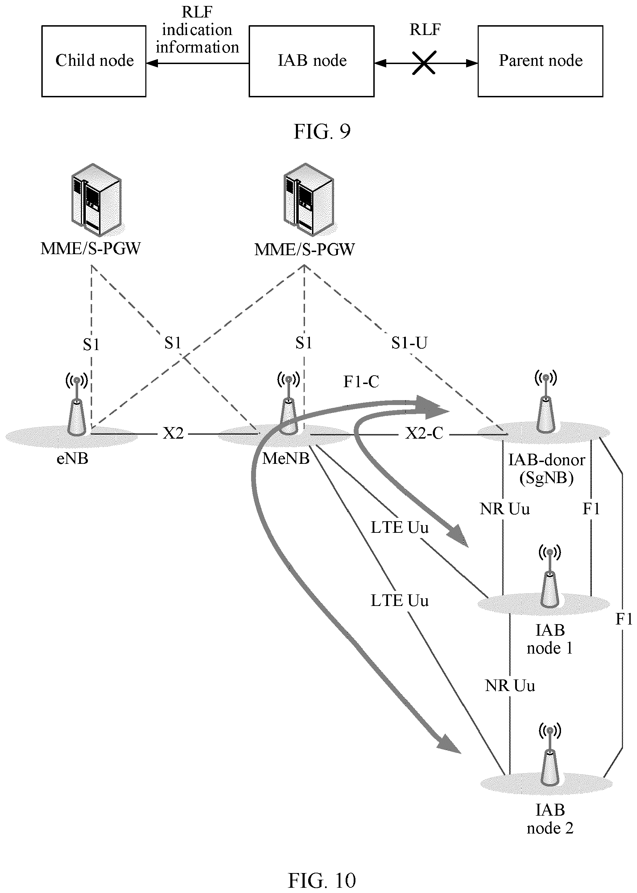

To ensure stable data transmission between UE and the IAB-donor (IAB-donor), a radio link recovery (recovery) mechanism is introduced. Specifically, after a radio link failure (Radio Link Failure, RLF) occurs between two IAB nodes, an attempt may be made to recover a radio link between the two IAB node. If the IAB node finds that an RLF occurs on a link between the IAB node and a parent node of the IAB node, and an RLF recovery fails (for example, RRC re-establishment fails), the IAB node sends RLF indication information to a child node of the IAB node, so that the child node of the IAB node triggers a link recovery procedure. For example, as shown in FIG. 9, when an RLF occurs on a link between an IAB node and a parent node of the IAB node, and an RLF recovery fails, the IAB node sends RLF indication information to a child node of the IAB node.

However, for an IAB node with dual connectivity, the IAB node accesses two parent nodes in a dual-connectivity manner. One of the two parent nodes serves as a master node (Master Node, MN) of the IAB node, and the other parent node serves as a secondary node (Secondary Node, SN) of the IAB node. A cell group (Cell Group, CG) configured on an MN side is a master cell group (Master Cell Group, MCG), and a cell group (Secondary Cell Group, SCG) configured on an SN side is a secondary cell group. In other words, the IAB node is served by the MCG and the SCG.

A condition for triggering the IAB node with the dual connectivity to send RLF indication information to a child node of the IAB node is that the IAB node initiates RRC re-establishment, where a cause of the RRC re-establishment is that an RLF occurs on backhaul links (Backhaul Links, BLs) in two cell groups (Cell Groups, CGs) of the IAB node, or an RLF occurs on a backhaul link in the master cell group and no master cell group fast recovery (no MCG fast recovery) is performed. Such an RLF indication manner cannot ensure the stable data transmission. Especially, in some scenarios, problems such as data packet stacking, link congestion, and an excessively long latency may be caused. The scenarios may include but are not limited to a CP-UP separation scenario (CP-UP separation scenario) in a DC scenario of the IAB node. CP-UP separation means that an F1-U (F1 interface user plane) service and an F1-C (F1 interface control plane) service of the IAB node with the dual connectivity do not reach an IAB-donor through a same path.

An IAB-MT encapsulates the F1 interface user plane (F1-U) service in a BAP layer data packet (such as a BAP PDU), and then forwards the packet to the IAB-donor over a backhaul link (via at least one intermediate IAB node) based on a BAP layer routing and an RLC channel mapping protocol of the backhaul link. This transmission mode may be referred to as "F1 over BAP". In a common DC scenario of non CP-UP separation, the F1 over BAP is also applicable to the F1-C service.

The F1 interface control plane (F1-C) service is encapsulated by the IAB-MT in an RRC message of the IAB-MT, and then reaches the MN or the SN through a Uu interface of a non-F1 terminating node (namely, the non-F1 terminating node), and then reaches the IAB-donor through an inter-base station Xn interface or X2 interface. This transmission mode may be referred to as "F1 over RRC". The F1 over RRC applies to the F1-C service.

The non-F1 terminating node is a node that does not have an F1 interface with the IAB node in a dual-connectivity mode. It may be understood that, for the IAB node in the dual-connectivity mode, when the IAB node transmits, by using an MT part of the IAB node, the F1-C service of the IAB node to an eNB or a gNB connected to the IAB node through an LTE Uu interface or an NR Uu interface (instead of the F1 interface), the eNB or the gNB is referred to as a non-F1 terminating node. For example, in EN-DC networking, the non-F1 terminating node may be an MeNB. In NR-DC networking, the non-F1 terminating node may be an MgNB or an SgNB. An F1 terminating node is an IAB-donor node. To be specific, the F1-U service and/or the F1-C service are/is transmitted between the IAB node and the donor node through the F1 interface.

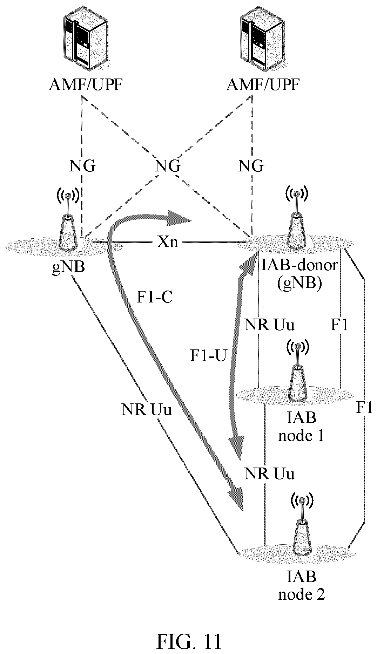

DC scenarios of IAB node in FIG. 10 and FIG. 11 are used as examples. FIG. 10 is a diagram of a CP-UP separation scenario in an EN-DC scenario according to an embodiment of this application. FIG. 11 is a diagram of a CP-UP separation scenario in an NR-DC scenario according to an embodiment of this application. As shown in FIG. 10, an IAB node (for example, an IAB node 2 or an IAB node 1 in FIG. 10) supports 4G and 5G network dual connectivity, namely, an EN-DC (E-UTRAN NR Dual Connectivity) mode. An LTE base station eNB is a master base station (Master eNB, MeNB), provides an LTE air interface (LTE Uu) connection for the IAB node, and establishes an S1 interface with a 4G evolved packet core network (Evolved Packet Core, EPC) to perform user plane and control plane transmission. A CG on an LTE side is an MCG. An IAB-donor (for example, a gNB) is a secondary base station, provides an NR air interface (NR Uu) connection for the IAB node, and establishes an S1 interface with a core network EPC to perform user plane transmission. A CG on an NR side is an SCG. An F1-C service and an F1-U service of the IAB node (for example, the IAB node 2 or the IAB node 1 in FIG. 10) separately reach an IAB-donor (for example, the gNB) through different paths. As shown in FIG. 11, an IAB node 2 establishes a connection to a network only through a new radio (New Radio, NR) air interface. In other words, the IAB node 2 is connected to two parent nodes in an NR-DC form. The two parent nodes may respectively serve as a master node (Master Node, MN) or a secondary node (Secondary Node, SN) of the IAB node 2. A CG configured on an MN side is an MCG, and a CG configured on an SN side is an SCG. An F1-C service and an F1-U service of the IAB node 2 separately reach an IAB-donor (gNB) through different paths.

Regardless of the CP-UP separation scenario in the EN-DC scenario shown in FIG. 10 or the CP-UP separation scenario in the NR-DC scenario shown in FIG. 11, for the IAB node, when the CG for transmitting the F1-C service is the MCG and a link RLF occurs, normal working of the SCG for transmitting the F1-U service is not immediately affected, and correspondingly, an F1-U service of a child node forwarded by the IAB node is not immediately affected. In this case, based on the foregoing triggering condition "the RLF occurs on the backhaul link in the master cell group and no master cell group fast recovery (no MCG fast recovery) is performed, causing the IAB node to initiate the RRC re-establishment", the IAB node sends RLF indication information to the child node of the IAB node. Consequently, the child node stops routing data to the IAB node, causing data packet stacking, link congestion, and an excessively long latency of the child node (where a data traffic volume related to a user plane is usually far higher than that of a control plane). In addition, when the cell group for transmitting the F1-U service is the SCG and a link RLF occurs only in the SCG, based on the foregoing triggering condition "the RLF occurs on the backhaul links (Backhaul Links, BLs) in the two cell groups (Cell Groups, CGs) of the IAB node, causing the IAB node initiates the RRC re-establishment", the IAB node does not send the RLF indication information to the child node, and the child node still normally schedules the data to the IAB node. This causes the data packet stacking, the link congestion, and the excessively long latency of the IAB node.

Therefore, this application provides a radio link failure indication method according to the following embodiments, to improve stability and reliability of data transmission in an IAB network, and help reduce the problems of the data packet stacking, the link congestion, and the excessively long latency of the IAB node. The following uses several embodiments to describe in detail the radio link failure indication method in this application.

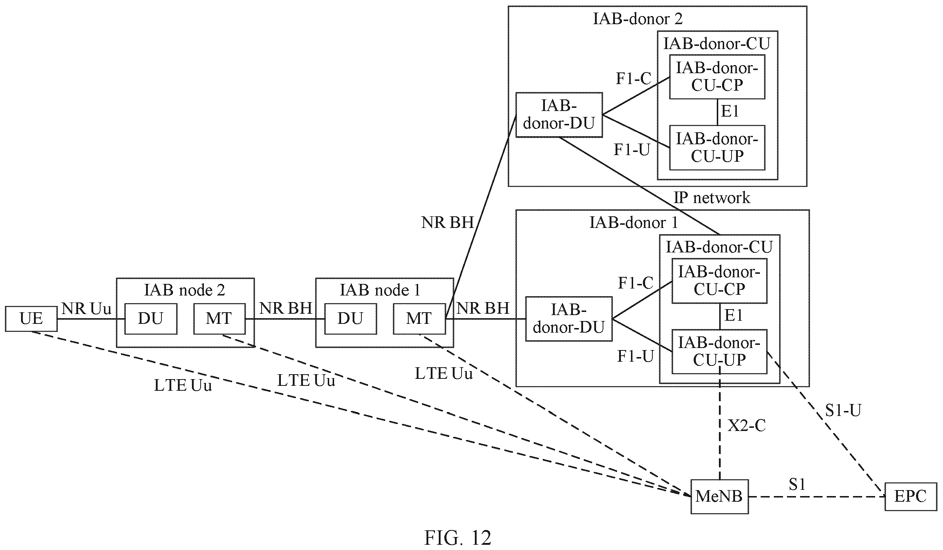

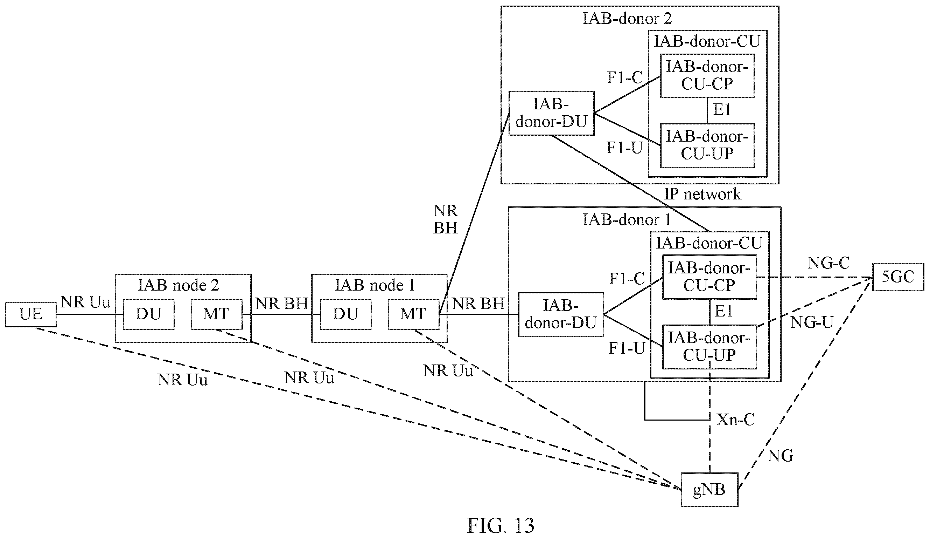

First, a communication system architecture to which the radio link failure indication method in this application is applied is first described. The radio link failure indication method in this application is mainly for an IAB network communication system in a DC form of networking, for example, an IAB network communication system in an EN-DC form of networking shown in FIG. 12, or an IAB network communication system in an NR-DC form of networking shown in FIG. 13.

For example, FIG. 12 is a diagram of an IAB network communication system in an EN-DC form of networking according to this application. As shown in FIG. 12, the IAB network communication system may include UE, an IAB node 1 (IAB node 1), an IAB node 2 (IAB node 2), an MeNB, an IAB-donor 1, an IAB-donor 2, and an EPC.

The UE may communicate with the IAB-donor 1 or the IAB-donor 2 via the IAB node 2 and the IAB node 1. The IAB node 2 is for providing access and backhaul services for the UE. The IAB node 2 may be formed by an IAB node DU (IAB-DU for short) and an IAB node MT (IAB-MT for short). The IAB node 1 is for providing access and backhaul services for a child node (the IAB node 2 herein). The IAB node 1 may be formed by an IAB node DU (IAB-DU for short) and an IAB node MT (IAB-MT for short).

The IAB-DU is a distributed unit part of the IAB node (the IAB node 1 or the IAB node 2 herein), and has a function similar to that of a gNB-DU. An F1 interface is established between the IAB-DU and an IAB-donor-CU, to provide an access service for a child node of the IAB-DU or the UE.

The IAB-MT is a mobile terminal part of the IAB node (the IAB node 1 or the IAB node 2 herein), has a function of the UE, and is for providing a data backhaul service for a child node of the IAB-MT.

The IAB-donor (the IAB-donor 1 or the IAB-donor 2 herein) is a donor base station that supports the IAB node, and may include an IAB-donor-CU and at least one IAB-donor-DU. The IAB-donor-CU part may include one IAB-donor-CU-CP (which is responsible for a control plane service) and at least one IAB-donor-CU-UP (which is responsible for a user plane service).

The IAB-donor-DU is a distributed unit part of the IAB-donor (the IAB-donor 1 or the IAB-donor 2 herein), has a function similar to that of the gNB-DU, and mainly implements functions of L1 and L2 protocol stacks, including functions of a PHY layer/a MAC layer/an RLC layer.

The IAB-donor-CU is a central unit part of the IAB-donor (the IAB-donor 1 or the IAB-donor 2 herein), has a function similar to that of a gNB-CU, and mainly implements functions of a PDCP layer, an SDAP layer, and an RRC layer. An F1-C interface is established between the IAB-donor-CU-CP and the IAB-DU, and an F1-U interface is established between the IAB-donor-CU-UP and the IAB-DU.

The MeNB is an LTE base station in an EN-DC networking mode. For the UE or the IAB node (IAB node 1 or IAB node 2 herein), the MeNB is a master base station (Master eNB, MeNB).

A BH is for representing a backhaul link, for example, an NR BH shown in FIG. 12, is specifically a connection channel between an MT part of the IAB node (the IAB node 1 or the IAB node 2 herein) and a DU part of a parent node of the IAB node, and is for backhauling a UE data packet or forwarding a data packet of the IAB-donor.

As shown in FIG. 12, the IAB node (the IAB node 1 or the IAB node 2 herein) supports 4G and 5G network dual connectivity, namely, the EN-DC mode. The LTE base station eNB is the MeNB, provides an LTE air interface (LTE Uu) connection for the IAB node, and establishes an S1 interface with the EPC to perform user plane and control plane transmission. A CG on an LTE side is an MCG. An NR base station gNB is a secondary base station, provides an NR air interface (NR Uu) connection for the IAB node, and establishes an S 1 interface with the core network EPC for user plane transmission. A CG on an NR side is an SCG. Similarly, the UE also supports EN-DC. The UE is connected to the master base station eNB through an LTE Uu interface, and is connected to the secondary base station IAB node 2 through an NR Uu interface. In some embodiments, the secondary base station of the UE may also be the IAB-donor 1 or the IAB-donor 2. As shown in FIG. 12, an EN-DC scenario of an IAB network may also support multi-hop IAB networking. To be specific, the IAB node may be connected to the IAB-donor 1 or the IAB-donor 2 by using a multi-hop wireless backhaul link.

Optionally, the EN-DC scenario of the IAB network may include a CP-UP separation scenario and a non CP-UP separation scenario. For the CP-UP separation scenario in the EN-DC scenario, an F1-C service of the IAB node (the IAB node 1 or the IAB node 2 herein) may reach a non-F1 terminating node (namely, the MeNB) through an LTE Uu interface channel, and then the non-F1 terminating node sends the F1-C service to the IAB-donor (the IAB-donor 1 or the IAB-donor 2 herein) through an inter-base station interface X2, where the IAB-donor may be referred to as an F1-terminating node (F1-terminating node) of the IAB node. An F1-U service of the IAB node (the IAB node 1 or the IAB node 2 herein) is multi-hop-forwarded by the IAB node to the IAB-donor (the IAB-donor 1 or the IAB-donor 2 herein) by using the backhaul link based on a BAP layer protocol.

It should be noted that the communication system architecture shown in FIG. 12 is described by using two IAB nodes as an example. The communication system architecture may be described by using more IAB nodes, for example, three, four, or more IAB nodes, or may be described by using fewer IAB nodes, for example, one IAB node. This application is not limited to the system architecture shown in FIG. 12.

FIG. 13 is a diagram of an IAB network communication system in an NR-DC form of networking according to this application. As shown in FIG. 13, the IAB network communication system may include UE, an IAB node 1 (IAB node 1), an IAB node 2 (IAB node 2), a gNB, an IAB-donor 1, an IAB-donor 2, and a 5GC.

For descriptions of the UE, the IAB node 1, the IAB node 2, an IAB-DU, an IAB-MT, the IAB-donor, an IAB-donor-DU and an IAB-donor-CU, refer to related descriptions in FIG. 12. Details are not described herein again.

The gNB is a 5G base station. For the UE or the IAB node (the IAB node 1 or the IAB node 2 herein), the gNB may be a master node (that is, an MN or an MgNB) or a secondary node (that is, an SN or an SgNB) of the UE or the IAB node in a DC mode.

Different from the IAB network communication system in the EN-DC form of the networking shown in FIG. 12, in the IAB network communication system in this embodiment, both the IAB node and the UE establish a connection to a network only through an NR air interface. The IAB node 2 is connected to two parent nodes the IAB node 1 and the gNB in the NR-DC form. The two parent nodes may respectively serve as an MN or an SN of the IAB node 2. A CG configured on an MN side is an MCG, and a CG configured on an SN side is an SCG.

Optionally, an NR-DC scenario of an IAB network may include a CP-UP separation scenario and a non CP-UP separation scenario. In the CP-UP separation scenario in the NR-DC scenario, an F1-C service of the IAB node (the IAB node 1 or the IAB node 2 herein) may reach a non-F1 terminating node through an NR Uu interface channel, and then the non-F 1 terminating node sends the F1-C service to the IAB-donor (the IAB-donor 1 or the IAB-donor 2 herein) through an inter-base station interface Xn, where the IAB-donor may be referred to as an F1-terminating node (F1-terminating node) of the IAB node. An F1-U service of the IAB node (the IAB node 1 or the IAB node 2 herein) is multi-hop-forwarded by the IAB node to the IAB-donor (the IAB-donor 1 or the IAB-donor 2 herein) by using a backhaul link based on a BAP layer protocol.

In the NR-DC networking, the non-F1 terminating node may be an MgNB, and the F1-terminating node may be an SgNB; or the non-F1 terminating node may be an SgNB, and the F1-terminating node may be an MgNB.

It should be noted that the communication system architecture shown in FIG. 13 is described by using two IAB nodes as an example. The communication system architecture may be described by using more IAB nodes, for example, three, four, or more IAB nodes, or may be described by using fewer IAB nodes, for example, one IAB node. This application is not limited to the system architecture shown in FIG. 13.

It should be further noted that a name of an F1 interface is merely an example, and does not constitute a limitation on a function of the F1 interface. In a 5G network and another future network, the F1 interface may alternatively have another name. This is not specifically limited in this embodiment of this application. In addition, it should be understood that, names of messages (or signaling) transmitted between the foregoing network elements are merely examples, and do not constitute any limitation on functions of the messages.

According to the radio link failure indication method in this application, a first node sends first RLF indication information to a second node when an RLF occurs on a backhaul link in a cell group that is of two cell groups and that is for transmitting an F1 interface user plane (F1-U) service, or when an RLF occurs on a backhaul link in a cell group that is of two cell groups and that is for transmitting an F1-U service and link recovery is performed, or when an RLF occurs on a backhaul link in a cell group that is of two cell groups and that is configured to transmit an F1 interface service based on a BAP layer, or when an RLF occurs on a backhaul link in a cell group that is of two cell groups and that is configured to transmit an F1 interface service based on a BAP and link recovery is performed. The first node is served by the two cell groups, and a child node of the first node is the second node. Therefore, the first node triggers sending of the first RLF indication information by detecting that the RLF occurs on the backhaul link in the cell group for transmitting the F1-U service, so that stability and reliability of data transmission in an IAB network can be improved. For the CP-UP separation scenario in the DC scenario, when the cell group for transmitting the F1-C service is an MCG and the RLF occurs, and the cell group for transmitting the F1-U service is an SCG and no RLF occurs, the first node does not immediately send the first RLF indication information to the second node based on a triggering manner of the first RLF indication information. In this way, an impact on a normal operation of the SCG for transmitting the F1-U service can be reduced. The second node may further continue to route data to the first node. This helps reduce problems of data packet stacking, link congestion, and an excessively long latency of the second node. In addition, when the cell group for transmitting the F1-U service is the SCG and the RLF occurs only in the SCG, the first node sends the first RLF indication information to the second node based on the triggering manner of the first RLF indication information, and the second node can trigger stopping of sending a data packet to the first node, or the second node can trigger a rerouting (rerouting) operation of a data packet routed by the first node. In this way, problems of data packet stacking, link congestion, and an excessively long latency of the first node can be reduced.

The transmitting an F1 interface service based on a BAP layer includes transmitting the F1-U service and/or an F1 interface control plane (F1-C) service based on the BAP layer. In a control plane-user plane (CP-UP) separation scenario in the DC scenario, the transmitting an F1 interface service based on a BAP layer may include transmitting the F1-U service based on the BAP layer, and the F1-C service may be transmitted based on an RRC layer (namely, the F1-C service over RRC). In a non CP-UP separation scenario in the DC scenario, the transmitting an F1 interface service based on a BAP layer may include transmitting the F1-U service and the F1-C service based on the BAP layer.

When it is detected that the RLF occurs on the backhaul link in the cell group that is configured to transmit the F1 interface service based on the BAP, the sending of the first RLF indication information is triggered. When it is detected that the RLF occurs on backhaul links in all cell groups that are configured to transmit the F1 interface service based on the BAP, the first RLF indication information indicates that an RLF occurs on a node-granularity link between the first node and the second node, that is, indicates that the RLF occurs on an entire backhaul link between the first node and the second node.

In some cases, that the RLF occurs on the backhaul link in the cell group for transmitting the F1-U service may also be understood as that the cell group for transmitting the F1-U service fails. That the RLF occurs on the backhaul link in the cell group for transmitting the F1-U service and the link recovery is performed may also be understood as that the cell group for transmitting the F1-U service fails and the link recovery is performed. The link recovery in this embodiment of this application may include fast recovery (fast recovery).

For example, for the IAB network communication system shown in FIG. 12 or FIG. 13, the first node in this embodiment of this application may be the IAB node 1 in FIG. 12 or FIG. 13, and the second node may be the IAB node 2 in FIG. 12 or FIG. 13.

The two cell groups may include the MCG and the SCG, the first node is served by the MCG and the SCG, and the child node of the first node is the second node. The communication method in this application may include a plurality of different implementations. The following separately describes the plurality of different implementations with reference to the accompanying drawings.

Implementation 1: When the SCG is for transmitting the F1-U service, no RLF occurs in the MCG, and the RLF occurs in the SCG, the first node sends the first RLF indication information to the second node.

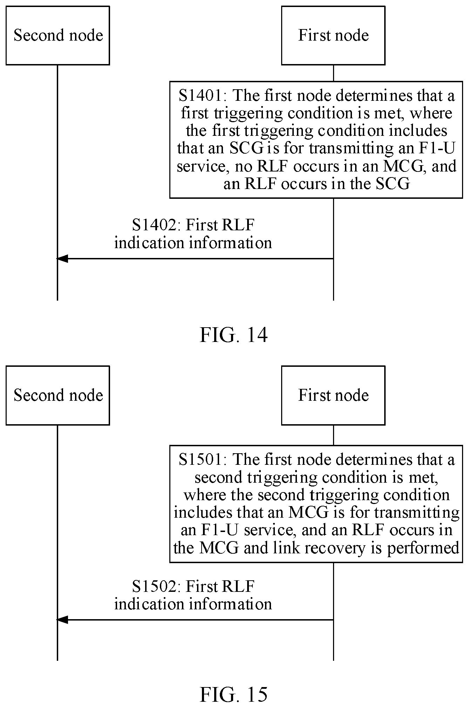

With reference to FIG. 14, the following describes Implementation 1 of the radio link failure indication method in this application. FIG. 14 is a flowchart of a radio link failure indication method according to this application. As shown in FIG. 14, the indication method may include the following steps.

S1401: The first node determines that a first triggering condition is met, where the first triggering condition includes that the SCG is for transmitting the F1-U service, no RLF occurs in the MCG, and the RLF occurs in the SCG.

For example, the first node may be the IAB node 1 in FIG. 12, and the second node may be the IAB node 2 in FIG. 12. The MeNB configures the MCG for the first node, and the IAB-donor 1 configures the SCG for the first node.

For example, the first node may be the IAB node 1 in FIG. 13, and the second node may be the IAB node 2 in FIG. 13. The gNB configures the MCG for the first node, and the IAB-donor 1 configures the SCG for the first node. Alternatively, the gNB configures the SCG for the first node, and the IAB-donor 1 configures the MCG for the first node.

That no RLF occurs in the MCG means that no RLF occurs on a backhaul link in the MCG. That the RLF occurs in the SCG means that an RLF occurs on a backhaul link in the SCG, and this may also be referred to as an SCG failure.

That the RLF occurs in the SCG in the first triggering condition may specifically include: The RLF occurs in the SCG and link recovery is performed.

In the first triggering condition, that the SCG is for transmitting the F1-U service may specifically include that the SCG is for transmitting the F1-U service based on the BAP. In other words, the F1-U service is transmitted in an "F1 over BAP" transmission mode in the SCG.

S1402: The first node sends the first RLF indication information to the second node.

The first node with dual connectivity sends the first RLF indication information to the second node by determining that the first triggering condition is met. The first RLF indication information may be Type-2 (Type-2) RLF indication information.

The MCG may be used for transmitting the F1-C service, or may be used for transmitting the F1-U service.

In an implementation, the MCG is only for transmitting the F1-C service, and the first RLF indication information indicates that an RLF occurs on a node-granularity link between the first node and the second node. That the RLF occurs on the node-granularity link means that an entire BH link between the first node and the second node is unavailable. That the entire BH link between the first node and the second node is unavailable specifically means that no data packet of the second node can be transmitted via the first node.

That the first RLF indication information indicates that an RLF occurs on a node-granularity link between the first node and the second node may include: The first RLF indication information indicates that the RLF occurs on the node-granularity link between the first node and the second node and link recovery is performed.

In some embodiments, the second node receives the first RLF indication information, where the first RLF indication information indicates that the RLF occurs on the node-granularity link between the first node and the second node, or indicates that the RLF occurs on the node-granularity link between the first node and the second node and the link recovery is performed. The second node may trigger, based on the first RLF indication information, stopping of sending a data packet to the first node.

In another possible implementation, the MCG is also for transmitting the F 1-U service, and the first RLF indication information may include a first BAP address, a first routing identifier routing ID, or a first path identifier path ID. The first routing identifier routing ID may be formed by the first BAP address and the first path identifier path ID. The first node may determine, based on different cases, content included in the first RLF indication information.

Different from the first RLF indication information indicating that the entire backhaul link between the first node and the second node is unavailable, when the first RLF indication information includes the first BAP address, the first routing identifier routing ID, or the first path identifier path ID, a first data packet of the second node cannot be transmitted via the first node, where a routing identifier carried in the first data packet is the first routing ID, or a path identifier in a routing identifier carried in the first data packet is the first path ID, or a BAP address in a routing identifier carried in the first data packet is the first BAP address.

For example, the first node determines that all paths that pass through the first node to a destination node are unavailable. The first RLF indication information may include the first BAP address, and the first BAP address is a BAP address of the destination node.

For example, the first node determines that a path of the first path ID is unavailable in all paths that pass through the first node to a destination node. The first RLF indication information may include the first path ID.

For example, the first node determines that a path of the first routing ID is unavailable in all paths that pass through the first node to a destination node. The first RLF indication information may include the first routing ID.

After receiving the first RLF indication information, the second node may skip sending the first data packet to the first node, where the routing identifier carried in the first data packet is the first routing ID, or the path identifier in the routing identifier carried in the first data packet is the first path ID, or the BAP address in the routing identifier carried in the first data packet is the first BAP address. For example, the second node can trigger a rerouting (rerouting) operation of the data packet routed by the first node, to skip sending the first data packet to the first node.

In this embodiment, when the SCG is for transmitting the F1-U service, no RLF occurs in the MCG, and the RLF occurs in the SCG, the first node sends the first RLF indication information to the second node, to improve stability and reliability of data transmission in an IAB network. For the CP-UP separation scenario in the DC scenario, when the cell group for transmitting the F1-C service is the MCG and the RLF occurs, and the cell group for transmitting the F1-U service is the SCG and no RLF occurs, the first node does not immediately send the first RLF indication information to the second node based on a triggering manner of the first RLF indication information. In this way, an impact on a normal operation of the SCG for transmitting the F1-U service can be reduced. The second node may further continue to route data to the first node. This helps reduce problems of data packet stacking, link congestion, and an excessively long latency of the second node. In addition, when the cell group for transmitting the F1-U service is the SCG and the RLF occurs only in the SCG, the first node sends the first RLF indication information to the second node based on the triggering manner of the first RLF indication information, and the second node can trigger stopping of sending the data packet to the first node, or the second node can trigger a rerouting (rerouting) operation of the data packet routed by the first node. In this way, problems of data packet stacking, link congestion, and an excessively long latency of the first node can be reduced.

Implementation 2: When the MCG is for transmitting the F1-U service, and the RLF occurs in the MCG and link recovery is performed, the first node sends the first RLF indication information to the second node.

With reference to FIG. 15, the following describes Implementation 2 of the radio link failure indication method in this application. FIG. 15 is a flowchart of a radio link failure indication method according to this application. As shown in FIG. 15, the indication method may include the following steps.

S1501: The first node determines that a second triggering condition is met, where the second triggering condition includes that the MCG is for transmitting the F1-U service, and the RLF occurs in the MCG and link recovery is performed.

For example, the first node may be the IAB node 1 in FIG. 13, and the second node may be the IAB node 2 in FIG. 13. The gNB configures the MCG for the first node, and the IAB-donor 1 configures the SCG for the first node. Alternatively, the gNB configures the SCG for the first node, and the IAB-donor 1 configures the MCG for the first node.

That the RLF occurs in the MCG means that an RLF occurs on a backhaul link in the SCG, and this may also be referred to as an SCG failure.

That the MCG is for transmitting the F1-U service in the second triggering condition may specifically include that the MCG is for transmitting the F1-U service based on the BAP. In other words, the F1-U service is transmitted in an "F1 over BAP" transmission mode in the MCG.

S1502: The first node sends the first RLF indication information to the second node.

The first node with dual connectivity sends the first RLF indication information to the second node by determining that the second triggering condition is met. The first RLF indication information may be Type-2 (Type-2) RLF indication information.

The SCG may be used for transmitting the F1-C service, or may be used for transmitting the F1-U service.

In an implementation, the SCG is only for transmitting the F1-C service, and the first RLF indication information indicates that an RLF occurs on a node-granularity link between the first node and the second node. That the RLF occurs on the node-granularity link means that an entire BH link between the first node and the second node is unavailable.

That the first RLF indication information indicates that an RLF occurs on a node-granularity link between the first node and the second node may include: The first RLF indication information indicates that the RLF occurs on the node-granularity link between the first node and the second node and link recovery is performed.

In some embodiments, the second node receives the first RLF indication information, where the first RLF indication information indicates that the RLF occurs on the node-granularity link between the first node and the second node, or indicates that the RLF occurs on the node-granularity link between the first node and the second node and the link recovery is performed. The second node may trigger, based on the first RLF indication information, stopping of sending a data packet to the first node.

In another possible implementation, the SCG is also for transmitting the F1-U service, no RLF occurs in the SCG, and the first RLF indication information may include a first BAP address, a first routing identifier routing ID, or a first path identifier path ID. The first routing identifier routing ID may be formed by the first BAP address and the first path identifier path ID. The first node may determine, based on different cases, content included in the first RLF indication information.

For example, the first node determines that all paths that pass through the first node to a destination node are unavailable. The first RLF indication information may include the first BAP address, and the first BAP address is a BAP address of the destination node.

For example, the first node determines that a path of the first path ID is unavailable in all paths that pass through the first node to a destination node. The first RLF indication information may include the first path ID.

For example, the first node determines that a path of the first routing ID is unavailable in all paths that pass through the first node to a destination node. The first RLF indication information may include the first routing ID.

After receiving the first RLF indication information, the second node may skip sending the first data packet to the first node, where a routing identifier carried in the first data packet is the first routing ID, or a path identifier in a routing identifier carried in the first data packet is the first path ID, or a BAP address in a routing identifier carried in the first data packet is the first BAP address. For example, the second node can trigger a rerouting (rerouting) operation of the data packet routed by the first node, to skip sending the first data packet to the first node.

In this embodiment, when the MCG is for transmitting the F1-U service, and the RLF occurs in the MCG and the link recovery is performed, the first node sends the first RLF indication information to the second node, to improve stability and reliability of data transmission in an IAB network. In comparison with a case in which an RLF indication is triggered when the RLF occurs in the MCG and no fast recovery is performed, in this application, the RLF indication is triggered by using the second triggering condition, so that the second node can be indicated in advance, to reduce problems of data packet stacking, link congestion, and an excessively long latency of the first node or the second node.

For the CP-UP separation scenario in the DC scenario, when the cell group for transmitting the F1-C service is the MCG and the RLF occurs, and the cell group for transmitting the F1-U service is the SCG and no RLF occurs, the first node does not immediately send the first RLF indication information to the second node based on a triggering manner of the first RLF indication information. In this way, an impact on a normal operation of the SCG for transmitting the F1-U service can be reduced. The second node may further continue to route data to the first node. This helps reduce the problems of the data packet stacking, the link congestion, and the excessively long latency of the second node.

In some embodiments, the first node may be configured with the first triggering condition and the second triggering condition, to send the first RLF indication information to the second node when either of the first triggering condition and the second triggering condition is met.

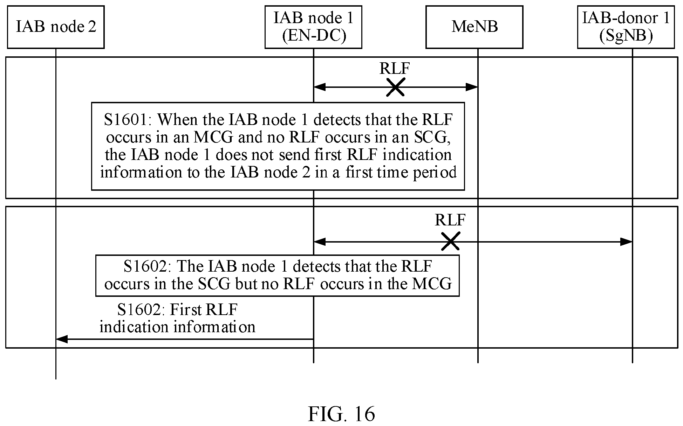

Implementation 1 and Implementation 2 of the radio link failure indication method in this application are applied to the CP-UP separation scenario in the EN-DC scenario of the IAB network shown in FIG. 12. The IAB node 1 in FIG. 12 serves as the first node, and the IAB node 2 in FIG. 12 serves as the second node. The MeNB configures the MCG, the IAB-donor 1 configures the SCG, the MCG is for transmitting the F1-C service, and the SCG is for transmitting the F1-U service. For a specific implementation, refer to descriptions of the method embodiment shown in FIG. 16.

FIG. 16 is a flowchart of a radio link failure indication method according to this application. As shown in FIG. 16, the indication method may include the following steps.

S1601: When an IAB node 1 detects that an RLF occurs in an MCG and no RLF occurs in an SCG, the IAB node 1 does not send first RLF indication information to an IAB node 2 in a first time period.

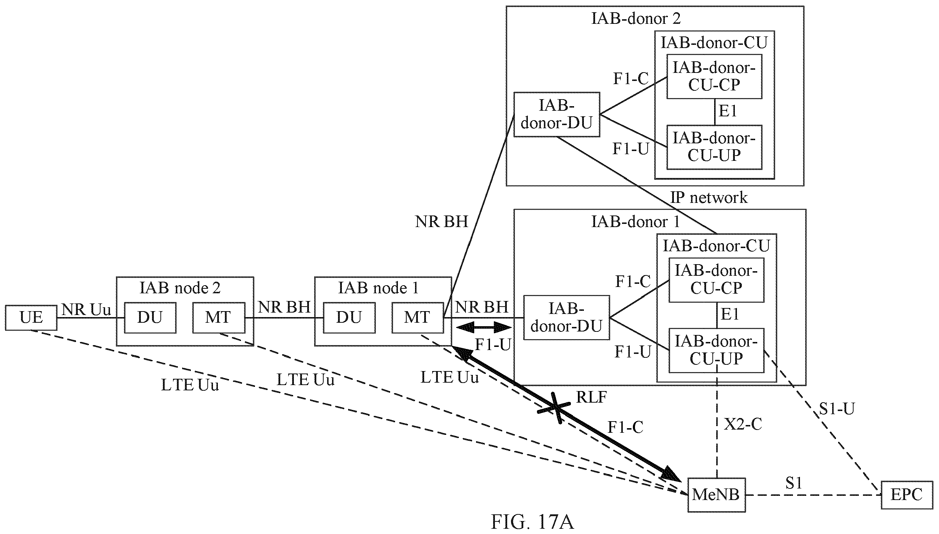

For example, FIG. 17A is a diagram of an RLF scenario according to this application. As shown in FIG. 17A, in the RLF scenario, an RLF occurs on a backhaul link between the IAB node 1 and an MeNB. To be specific, an RLF occurs on a backhaul link in the MCG, and no RLF occurs on a backhaul link between the IAB node 1 and an IAB-donor 1. That is, no RLF occurs on a backhaul link in the SCG. Therefore, the current RLF scenario does not meet the foregoing first triggering condition or the second triggering condition, and the IAB node 1 does not immediately send the first RLF indication information to the IAB node 2. For example, the IAB node 1 does not send the first RLF indication information to the IAB node 2 in the first time period. The first time period may be flexibly set based on a requirement.

Therefore, when the RLF occurs on a link to the MeNB or the RLF occurs in the MCG for transmitting an F1-C service, the IAB node 1 does not immediately send the first RLF indication information to the IAB node 2. The link to the MeNB may also be understood as a link on which an LTE Uu interface is located, an LTE leg (LTE leg) link, or a link to a non-F1 terminating node. The MCG for transmitting the F1-C service may include an MCG for transmitting the F1-C service based on an RRC protocol layer.

S1602: The IAB node 1 detects that an RLF occurs in the SCG and no RLF occurs in the MCG, and the IAB node 1 sends the first RLF indication information to the IAB node 2.

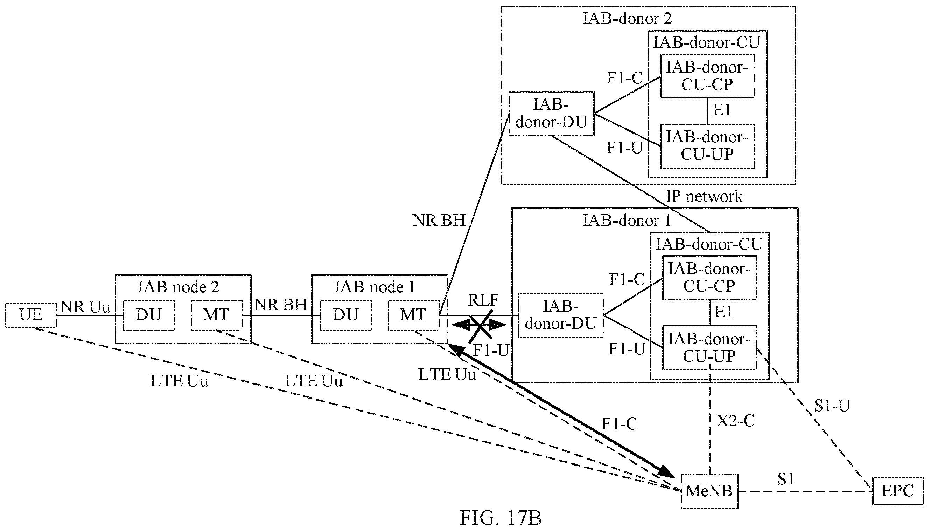

For example, FIG. 17B is a diagram of an RLF scenario according to this application. As shown in FIG. 17B, in the RLF scenario, an RLF occurs on a backhaul link between the IAB node 1 and an IAB-donor 1. To be specific, an RLF occurs on a backhaul link in the SCG, and no RLF occurs on a backhaul link between the IAB node 1 and an MeNB. That is, no RLF occurs on a backhaul link in the MCG. Therefore, the current RLF scenario meets the foregoing first triggering condition, and the IAB node 1 sends the first RLF indication information to the IAB node 2.

For specific descriptions of the first RLF indication information, refer to the descriptions of S1402 in FIG. 14. Details are not described herein again.

In this embodiment, when the cell group for transmitting the F1-C service is the MCG and the RLF occurs, and the cell group for transmitting the F1-U service is the SCG and no RLF occurs, the first node does not immediately send the first RLF indication information to the second node based on a triggering manner of the first RLF indication information. In this way, an impact on a normal operation of the SCG for transmitting the F1-U service can be reduced. The second node may further continue to route data to the first node. This helps reduce problems of data packet stacking, link congestion, and an excessively long latency of the second node. When the cell group for transmitting the F1-U service is the SCG and the RLF occurs only in the SCG, the first node sends the first RLF indication information to the second node based on the triggering manner of the first RLF indication information, and the second node can trigger stopping of sending a data packet to the first node, or the second node can trigger a rerouting (rerouting) operation of the data packet routed by the first node. In this way, problems of data packet stacking, link congestion, and an excessively long latency of the first node can be reduced.

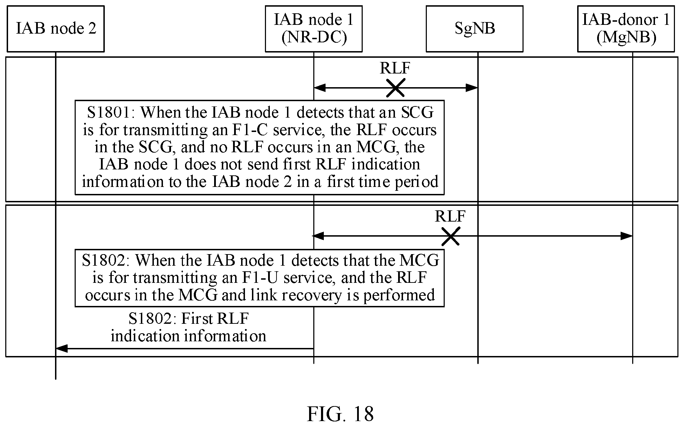

Implementation 1 and Implementation 2 of the radio link failure indication method in this application are applied to the NR-DC scenario of the IAB network shown in FIG. 13. The IAB node 1 in FIG. 13 serves as the first node, and the IAB node 2 in FIG. 13 serves as the second node. A gNB configures the MCG, and the IAB-donor 1 configures the SCG. Alternatively, the gNB configures the SCG, and the IAB-donor 1 configures the MCG. This embodiment is described by using an example in which the gNB configures the SCG and the IAB-donor 1 configures the MCG. For a specific implementation, refer to descriptions of the method embodiment shown in FIG. 18.

FIG. 18 is a flowchart of a radio link failure indication method according to this application. As shown in FIG. 18, the indication method may include the following steps.

S1801: When an IAB node 1 detects that an SCG is for transmitting an F1-C service, an RLF occurs in the SCG, and no RLF occurs in an MCG, the IAB node 1 does not send first RLF indication information to an IAB node 2 in a first time period.

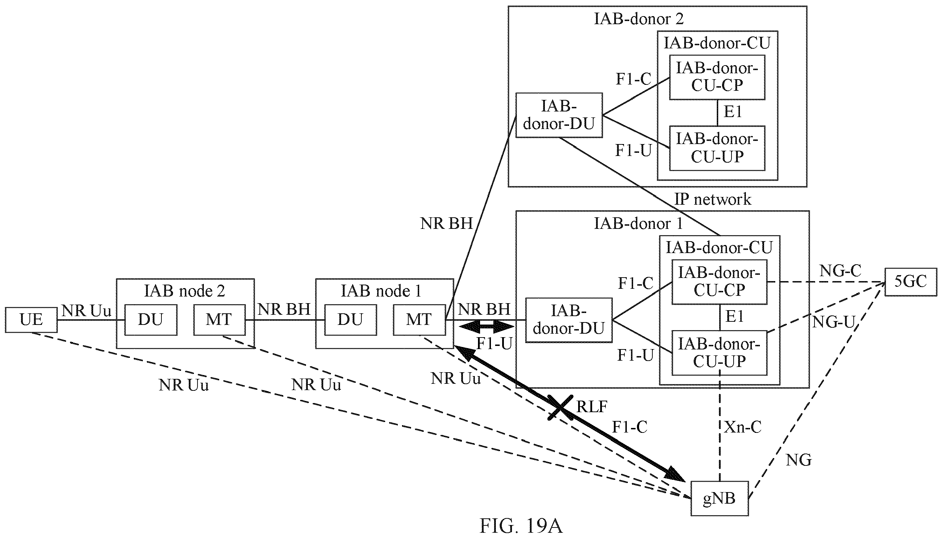

For example, FIG. 19A is a diagram of an RLF scenario according to this application. As shown in FIG. 19A, in the RLF scenario, an RLF occurs on a backhaul link between the IAB node 1 and a gNB. To be specific, an RLF occurs on a backhaul link in the SCG, and no RLF occurs on a backhaul link between the IAB node 1 and an IAB-donor 1. That is, no RLF occurs on a backhaul link in the MCG. Therefore, the current RLF scenario does not meet the foregoing first triggering condition or the second triggering condition, and the IAB node 1 does not immediately send the first RLF indication information to the IAB node 2. For example, the IAB node 1 does not send the first RLF indication information to the IAB node 2 in the first time period. The first time period may be flexibly set based on a requirement.

Therefore, when an RLF occurs on a link to a non-F1 terminating node (for example, the gNB herein) or an RLF occurs in a CG (for example, the SCG herein) for transmitting the F1-C service, the IAB node 1 does not immediately send the first RLF indication information to the IAB node 2. The CG for transmitting the F1-C service may include a CG configured to transmit the F1-C service based on an RRC protocol layer.

S1802: When the IAB node 1 detects that the MCG is for transmitting an F1-U service, and an RLF occurs in the MCG and link recovery is performed, the IAB node 1 sends the first RLF indication information to the IAB node 2.

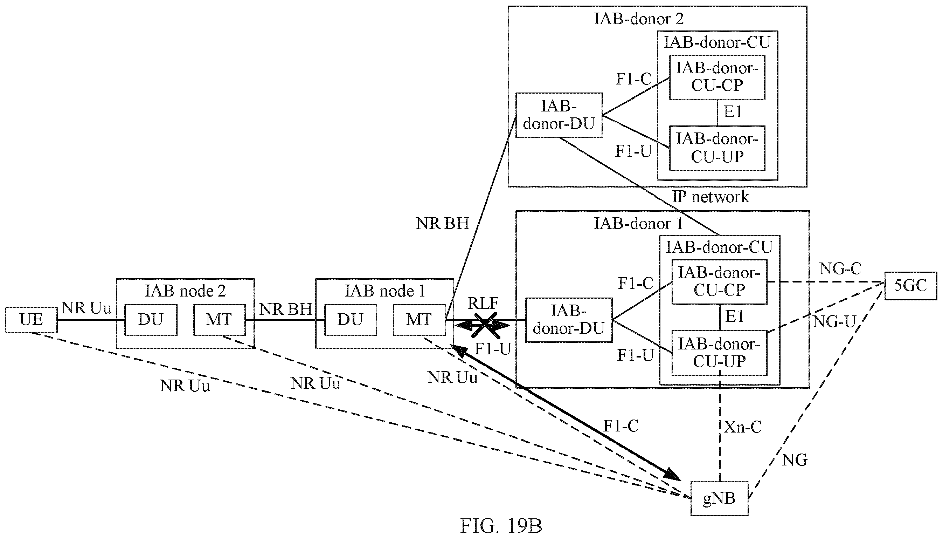

For example, FIG. 19B is a diagram of an RLF scenario according to this application. As shown in FIG. 19B, in the RLF scenario, an RLF occurs on a backhaul link between the IAB node 1 and an IAB-donor 1. That is, an RLF occurs on a backhaul link in the MCG. Therefore, the current RLF scenario meets the foregoing second triggering condition, and the IAB node 1 sends the first RLF indication information to the IAB node 2.

For specific descriptions of the first RLF indication information, refer to the descriptions of S1502 in FIG. 15. Details are not described herein again.

In this embodiment, when the cell group for transmitting the F1-C service is the MCG and the RLF occurs, and the cell group for transmitting the F1-U service is the SCG and no RLF occurs, the first node does not immediately send the first RLF indication information to the second node based on a triggering manner of the first RLF indication information. In this way, an impact on a normal operation of the SCG for transmitting the F1-U service can be reduced. The second node may further continue to route data to the first node. This helps reduce problems of data packet stacking, link congestion, and an excessively long latency of the second node. When the cell group for transmitting the F1-U service is the MCG, and the RLF occurs in the MCG and link recovery is performed, the first node sends the first RLF indication information to the second node based on the triggering manner of the first RLF indication information, and the second node can trigger stopping of sending the data packet to the first node, or the second node can trigger a rerouting (rerouting) operation of the data packet routed by the first node. In this way, problems of data packet stacking, link congestion, and an excessively long latency of the first node can be reduced.

In the foregoing embodiment, the first node sends the first RLF indication information to the second node by detecting the first triggering condition and/or the second triggering condition. The second node may trigger, based on the first RLF indication information, stopping of sending the data packet to the first node, or trigger a rerouting (rerouting) operation of the data packet routed by the first node, to reduce the problems of the data packet stacking, the link congestion, and the excessively long latency. Different from the foregoing embodiment, this application further provides the following radio link failure indication method. RLF link information or routing information is carried in second RLF indication information, so that a second node performs a corresponding operation based on the RLF link information or routing information, to reduce problems of data packet stacking, link congestion, and an excessively long latency.

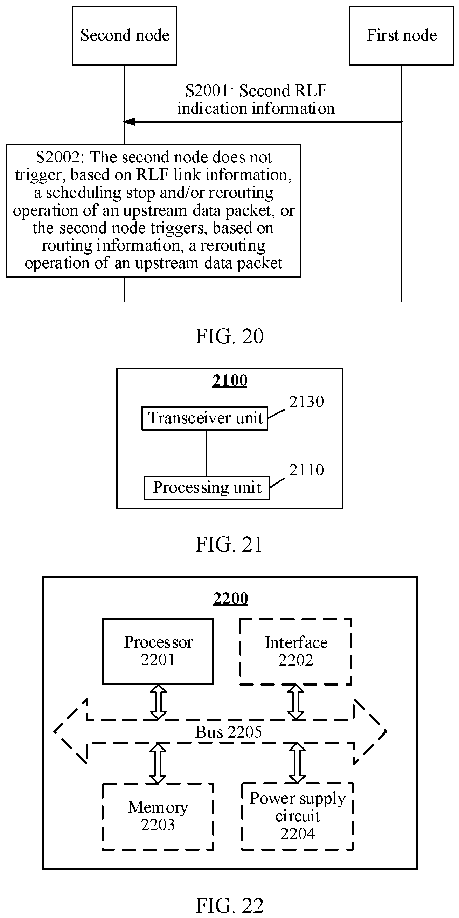

FIG. 20 is a flowchart of a radio link failure indication method according to an embodiment of this application. Same as the foregoing embodiment, a first node is served by an SCG and an MCG, and a second node is a child node of the first node. As shown in FIG. 20, the indication method may include the following steps.

S2001: The first node sends second RLF indication information to the second node.

For example, the first node may be the IAB node 1 in FIG. 12, and the second node may be the IAB node 2 in FIG. 12. An MeNB configures the MCG for the first node, and an IAB-donor 1 configures the SCG for the first node.

For example, the first node may be the IAB node 1 in FIG. 13, and the second node may be the IAB node 2 in FIG. 13. A gNB configures the MCG for the first node, and the IAB-donor 1 configures the SCG for the first node. Alternatively, the gNB configures the SCG for the first node, and the IAB-donor 1 configures the MCG for the first node.

The second RLF indication information may be a Type-1 (Type-1) RLF indication, a Type-2 (Type-2) RLF indication, a Type-3 (Type-3) RLF indication, or a Type-4 (Type-4) RLF indication.

The type (Type-1) RLF indication is indication information triggered when it is discovered that an RLF occurs on a backhaul link. To be specific, once the first node discovers that the RLF occurs on the backhaul link, the first node sends the type (Type-1) RLF indication to the second node. The Type-2 (Type-2) RLF indication is indication information triggered when it is detected that an RLF occurs on a backhaul link and link recovery is performed. To be specific, once the first node discovers that the RLF occurs on the backhaul link and prepares to perform link recovery, the first node sends the Type-2 (Type-2) RLF indication to the second node. The Type-3 (Type-3) RLF indication is indication information triggered during link recovery. To be specific, once a link of the first node is recovered, the first node sends the Type-3 (Type-3) RLF indication to the second node. The Type-4 (Type-4) RLF indication is indication information triggered when it is detected that an RLF occurs on a backhaul link and link recovery fails. To be specific, when the first node detects that the RLF occurs on the backhaul link and performs link recovery, and the link recovery fails, the first node sends the Type-4 (Type-4) RLF indication to the second node.

In an implementation, the second RLF indication information may include RLF link information. The RLF link information may be backhaul link information to a non-F1 terminating node, LTE-Uu interface link information (in the foregoing EN-DC scenario), backhaul link information for transmitting an F1-C service, or cell group identifier information for transmitting an F1-C service based on an RRC protocol layer. In the EN-DC scenario, the cell group identifier information for transmitting the F1-C service based on the RRC protocol layer may be MCG identifier information for transmitting the F1-C service based on the RRC protocol layer. In an NR-DC scenario, the cell group identifier information for transmitting the F1-C service based on the RRC protocol layer may be the MCG or SCG identifier information for transmitting the F1-C service based on the RRC protocol layer.

For example, when the first node detects the RLF scenario shown in FIG. 17A, the second RLF indication information sent by the first node to the second node may include the RLF link information.

In another possible implementation, the second RLF indication information may include routing information. The routing information may include a first BAP address, a first routing ID, or a first path ID.

For example, when the first node detects the RLF scenario shown in FIG. 17B, the second RLF indication information sent by the first node to the second node may include the routing information.

S2002: The second node does not trigger, based on the RLF link information, a scheduling stop and/or rerouting operation of an upstream data packet, or the second node triggers, based on the routing information, a rerouting operation of an upstream data packet.

For example, when the second RLF indication information received by the second node includes the RLF link information, the second node does not trigger, based on the RLF link information, the scheduling stop and/or rerouting operation of the upstream data packet. Optionally, when the second RLF indication information is the Type-3 (Type-3) RLF indication, the second node does not stop upstream data packet rerouting caused by an RLF that occurs on another link.

For example, when the second RLF indication information received by the second node includes the routing information, the second node triggers the rerouting operation of the upstream data packet based on the routing information. For example, a BAP routing ID in the upstream data packet is rewritten.

In this embodiment, the first node sends the second RLF indication information to the second node, and when the second RLF indication information includes the RLF link information, the second node does not trigger, based on the RLF link information, the scheduling stop and/or rerouting operation of the upstream data packet, so that problems of data packet stacking, link congestion, and an excessively long latency of the second node caused by an unnecessary RLF indication can be reduced. When the second RLF indication information includes the routing information, the second node triggers the rerouting operation of the upstream data packet based on the routing information, so that problems of data packet stacking, link congestion, and an excessively long latency of the first node can be reduced.

Based on the foregoing similar technical concept, an embodiment of this application provides a communication apparatus. The communication apparatus may be the first node or the second node in any possible design solution of the method in the foregoing embodiments. The communication apparatus includes at least one corresponding unit configured to perform a method step, an operation, or a behavior performed by the first node or the second node in the communication method provided above. The at least one unit may be disposed in one-to-one correspondence with the method steps, the operations, or the behavior performed by the first node or the second node. These units may be implemented by using a computer program, may be implemented by using a hardware circuit, or may be implemented by using a computer program in combination with a hardware circuit.

According to the foregoing methods, FIG. 21 is a diagram of a communication apparatus 2100 according to an embodiment of this application.

The apparatus 2100 may be a relay forwarding node having an access and backhaul capability, or may be a chip or a circuit, for example, a chip or a circuit that may be disposed on a relay forwarding node having an access and backhaul capability.

The apparatus 2100 may include a processing unit 2110 (for example, including a processor or a communication processor) and a transceiver unit 2130.

Optionally, the transceiver unit 2130 may be implemented by using a transceiver, a transceiver-related circuit, or an interface circuit.

In some embodiments, the apparatus 2100 is used as a first node, the first node is served by a first master cell group MCG and a first secondary cell group SCG, a child node of the first node is a second node, and the processing unit 2110 is configured to send RLF indication information to the second node through the transceiver unit when the first SCG is for transmitting an F1 interface user plane service, no radio link failure RLF occurs in the first MCG, and an RLF occurs in the first SCG.

Optionally, that the processing unit 2110 is configured to send RLF indication information to the second node through the transceiver unit 2130 when the first SCG is for transmitting an F1 interface user plane service, no radio link failure RLF occurs in the first MCG, and an RLF occurs in the first SCG includes: The processing unit 2110 is configured to send an RLF indication to the second node through the transceiver unit 2130 when the first SCG is for transmitting the F1 interface user plane service, no radio link failure RLF occurs in the first MCG, and the RLF occurs in the first SCG and link recovery is performed.

Optionally, that the first SCG is for transmitting the F1 interface user plane service includes: The first SCG is configured to transmit the F1 interface user plane service based on a backhaul adaptation protocol BAP layer.

Optionally, the first MCG is only for transmitting an F1 interface control plane service, and the RLF indication information indicates that an RLF occurs on a node-granularity link between the first node and the second node.

Optionally, that the RLF indication information indicates that an RLF occurs on a node-granularity link between the first node and the second node includes: The RLF indication information indicates that the RLF occurs on the node-granularity link between the first node and the second node and link recovery is performed.

Optionally, the first MCG is also for transmitting the F1 interface user plane service, and the RLF indication information includes a first BAP address, a first routing identifier routing ID, or a first path identifier path ID.

Optionally, the processing unit 2110 is configured to determine that all paths that pass through the first node to a destination node are unavailable, where the RLF indication information includes the first BAP address, and the first BAP address is a BAP address of the destination node; the processing unit 2110 is configured to determine that a path of the first path ID is unavailable in all paths that pass through the first node to a destination node, where the RLF indication information includes the first path ID; or the processing unit 2110 is configured to determine that a path of the first routing ID is unavailable in all paths that pass through the first node to a destination node, where the RLF indication information includes the first routing ID.

In some embodiments, the apparatus 2100 is used as a first node, the first node is served by a first master cell group MCG and a first secondary cell group SCG, a child node of the first node is a second node, and the processing unit 2110 is configured to send RLF indication information to the second node through the transceiver unit 2130 when the first MCG is for transmitting an F1 interface user plane service, and a radio link failure RLF occurs in the first MCG and link recovery is performed.

Optionally, that the first MCG is for transmitting an F1 interface user plane service includes: The first MCG is configured to transmit the F1 interface user plane service based on a backhaul adaptation protocol BAP layer.

Optionally, the first SCG is only for transmitting an F1 interface control plane service, and the RLF indication information indicates that an RLF occurs on a node-granularity link between the first node and the second node.

Optionally, the first SCG is also for transmitting the F1 interface user plane service, no RLF occurs in the first SCG, and the RLF indication information includes a first BAP address, a first routing identifier routing ID, or a first path identifier path ID.

Optionally, the processing unit 2110 is configured to determine that all paths that pass through the first node to a destination node are unavailable, where the RLF indication information includes the first BAP address, and the first BAP address is a BAP address of the destination node; the processing unit 2110 is configured to determine that a path of the first path ID is unavailable in all paths that pass through the first node to a destination node, where the RLF indication information includes the first path ID; or the processing unit 2110 is configured to determine that a path of the first routing ID is unavailable in all paths that pass through the first node to a destination node, where the RLF indication information includes the first routing ID.

The units in the foregoing embodiment may also be referred to as modules, circuits, or components.

For concepts, explanations, detailed descriptions, and other steps of the apparatus 2100 that are related to the technical solutions provided in embodiments of this application, refer to descriptions of the content in the foregoing methods or other embodiments. Details are not described herein again.

FIG. 22 is a diagram of a structure of a communication apparatus 2200 according to an embodiment of this application. The communication apparatus 2200 may be configured to implement a function of the relay node (for example, the first node) having an access and backhaul function in the foregoing method. As shown in FIG. 22, the communication apparatus 2200 includes one or more processors 2201, and optionally, further includes an interface 2202. When related program instructions are executed in the at least one processor 2201, the apparatus 2200 may be enabled to implement the radio link failure indication method and any possible design of the radio link failure indication method provided in any one of the foregoing embodiments. Alternatively, the processor 2201 is configured to implement, by using a logic circuit or executing code instructions, the radio link failure indication method and any possible design of the radio link failure indication method provided in any one of the foregoing embodiments. The interface 2202 may be configured to receive the program instructions and transmit the program instructions to the processor, or the interface 2202 may be used by the apparatus 2200 to communicate and interact with another communication device, for example, exchange control signaling and/or service data. For example, the interface 2202 may be configured to: receive a signal from an apparatus other than the apparatus 2200 and transmit the signal to the processor 2201, or send a signal from the processor 2201 to a communication apparatus other than the apparatus 2200. The interface 2202 may be a code and/or data read/write interface circuit, or the interface 2202 may be a signal transmission interface circuit between a communication processor and a transceiver, or a pin of a chip. Optionally, the communication apparatus 2200 may further include at least one memory 2203, and the memory 2203 may be configured to store the related program instructions and/or data that are/is required. Optionally, the apparatus 2200 may further include a power supply circuit 2204. The power supply circuit 2204 may be configured to supply power to the processor 2201. The power supply circuit 2204 and the processor 2201 may be located in a same chip, or the power supply circuit 2204 may be located in a chip other than a chip in which the processor 2201 is located. Optionally, the apparatus 2200 may further include a bus 2205, and parts in the apparatus 2200 may be interconnected through the bus 2205.

It should be understood that the processor in embodiments of this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor or the processor may be any conventional processor or the like.

It should be further understood that the memory in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitation, many forms of a random access memory (random access memory, RAM) are available, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), or a direct rambus random access memory (direct rambus RAM, DR RAM).

The power supply circuit in embodiments of this application includes but is not limited to at least one of the following: a power supply line, a power supply subsystem, a power management chip, a power consumption management processor, or a power consumption management control circuit.

The transceiver apparatus, the interface, or the transceiver in embodiments of this application may include a separate transmitter and/or a separate receiver, or the transmitter and the receiver may be integrated. The transceiver apparatus, the interface, or the transceiver may work under an indication of a corresponding processor. Optionally, the transmitter may correspond to a transmitter machine in a physical device, and the receiver may correspond to a receiver machine in the physical device.

It may be clearly understood by a person skilled in the art that, for the purpose of convenient and brief description, division of the foregoing functional modules is used as an example for illustration. In actual application, the foregoing functions can be allocated to different functional modules and implemented according to a requirement, that is, an inner structure of an apparatus is divided into different functional modules to implement all or some of the functions described above. For a detailed working process of the foregoing system, apparatus, and unit, refer to a corresponding process in the foregoing method embodiments, and details are not described herein again.

In embodiments of this application, it should be understood that the disclosed systems, apparatuses, and methods may be implemented in other manners. For example, the described apparatus embodiments are merely examples. For example, division into the modules or units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

A person of ordinary skill in the art may be aware that, in combination with examples described in embodiments disclosed in this specification, units or algorithm operations may be implemented by hardware, software, or a combination of software and hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

In this application, "implemented by software" may mean that a processor reads and executes program instructions stored in a memory to implement a function corresponding to the foregoing module or unit. The processor is a processing circuit that has a function of executing the program instructions, and includes but is not limited to at least one of the following types of processing circuits that can execute the program instructions such as a central processing unit (central processing unit, CPU), a microprocessor, a digital signal processor (digital signal processor, DSP), a microcontroller unit (microcontroller unit, MCU), or an artificial intelligence processor. In some other embodiments, the processor may further include a circuit that has another processing function (for example, a hardware circuit, a bus, and an interface circuit that are used for hardware acceleration). The processor may be presented in a form of an integrated chip. For example, the processor may be presented in a form of an integrated chip whose processing function includes only a function of executing software instructions; or the processor may be presented in a form of a system-on-a-chip (system-on-a-chip, SoC). To be specific, on one chip, in addition to the processing circuit (which is usually referred to as a "core") that can execute the program instructions, another hardware circuit configured to implement a specific function is further included (where certainly, the hardware circuit may also be independently implemented based on an ASIC or an FPGA). Correspondingly, in addition to the function of executing software instructions, processing functions may further include various hardware acceleration functions (such as AI computing, encoding and decoding, and compression and decompression).

In this application, "implemented by hardware" means that a function of the foregoing module or unit is implemented through a hardware processing circuit that does not have a function of processing program instructions. The hardware processing circuit may include a discrete hardware component, or may be an integrated circuit. To reduce power consumption and a size, an integrated circuit is usually used for implementation. The hardware processing circuit may include an ASIC, or a programmable logic device (programmable logic device, PLD). The PLD may further include an FPGA, a complex programmable logic device (complex programmable logic device, CPLD), or the like. These hardware processing circuits may be an independently packaged semiconductor chip (for example, packaged into an ASIC), or may be integrated with another circuit (such as a CPU or a DSP) and then packaged into a semiconductor chip. For example, a plurality of hardware circuits and CPUs may be formed on one silicon base, and are independently packaged into a chip, where the chip is also referred to as a SoC; or a circuit that is configured to implement an FPGA function and a CPU may be formed on a silicon base, and are independently packaged into a chip, where the chip is also referred to as a system-on-a-programmable-chip (system-on-a-programmable-chip, SoPC).

It should be noted that, when this application is implemented by using software, hardware, or a combination of software and hardware, this application may be implemented by using different software and hardware, which is not limited to only one type of software or hardware. For example, one of the modules or units may be implemented through the CPU, and another module or unit may be implemented through the DSP. Similarly, when hardware is used for implementation, one of the modules or units may be implemented through the ASIC, and another module or unit may be implemented through the FPGA. Certainly, it is also not specified that some or all modules or units are implemented by using a same type of software (for example, through the CPU) or a same type of hardware (for example, through the ASIC). In addition, a person skilled in the art may know that, software usually has better flexibility but poorer performance than hardware, and hardware is exactly opposite. Therefore, a person skilled in the art may select software, hardware, or a combination thereof for implementation based on an actual requirement.

In the foregoing embodiments, the description of each embodiment has respective focuses. For a part that is not described in detail in an embodiment, reference may be made to related descriptions in other embodiments. Embodiments of this application may be combined, or some technical features in embodiments may be decoupled from specific embodiments and combined with a conventional technology, to resolve the technical problem in embodiments of this application.

In embodiments of this application, the units described as separate components may or may not be physically separate, and components displayed as units may or may not be physical units, may be located in one position, or may be distributed on a plurality of network units. Some or all of the units may be selected according to actual requirements to achieve the objectives of the solutions of embodiments in this application.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or a part of the technical solutions may be implemented in the form of a software product. The computer software product is stored in a storage medium and may include several instructions for instructing a computer device, for example, a personal computer, a server, or a network device, or a processor (processor) to perform all or a part of the operations of the methods described in embodiments of this application. The foregoing storage medium may include any medium or computer-readable storage medium that can store program code, such as a USB flash drive, a removable hard disk, a read-only memory (read-only memory, ROM), a random access memory (random access memory, RAM), a magnetic disk, or an optical disc.

In descriptions of this application, terms such as "first", "second", "S101 ", or "S102" are merely used for distinguishing and description and for ease of organizing this article. Different sequences or numbers do not have specific technical meanings, and cannot be understood as indicating or implying relative importance, or indicating or implying an execution sequence of operations.

The term "and/or" in this application describes only an association relationship for associated obj ects, and indicates that three relationships may exist. For example, "A and/or B" may indicate the following three cases: Only A exists; both A and B exist; or only B exists. A and B may be singular or plural. In addition, the character "/" in this specification indicates an "or" relationship between the associated objects.

In this application, "transmission" may include the following three cases: data sending, data receiving, or data sending and data receiving. In this application, "data" may include service data and/or signaling data.

In this application, the terms "include" or "have" and any variation thereof are intended to cover non-exclusive inclusion. For example, a process/method that includes a series of steps, or a system/product/device that includes a series of units is not necessarily limited to those expressly listed steps or units, but may include other steps or units not explicitly listed or inherent to these processes/methods/products/devices.

In the descriptions of this application, unless otherwise specified, a quantity of nouns indicates "a singular noun or a plural noun", namely, "one or more". "At least one" indicates one or more. "Including at least one of the following: A, B, and C" may indicate that A is included, B is included, C is included, A and B are included, A and C are included, B and C are included, or A, B and C are included, where A, B, and C may be singular or plural.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

## Claims

1. A communication method, wherein a first node is served by a first master cell group MCG and a first secondary cell group SCG, a child node of the first node is a second node, and the method comprises:
sending, by the first node, RLF indication information to the second node when the first SCG is for transmitting an F1 interface user plane service, no radio link failure RLF occurs in the first MCG, and an RLF occurs in the first SCG.

2. The method according to claim 1, wherein the sending, by the first node, RLF indication information to the second node when the first SCG is for transmitting an F1 interface user plane service, no radio link failure RLF occurs in the first MCG, and an RLF occurs in the first SCG comprises:
sending, by the first node, an RLF indication to the second node when the first SCG is for transmitting the F1 interface user plane service, no radio link failure RLF occurs in the first MCG, and the RLF occurs in the first SCG and link recovery is performed.

3. The method according to claim 1 or 2, wherein that the first SCG is for transmitting an F1 interface user plane service comprises:
the first SCG is for transmitting the F1 interface user plane service based on a backhaul adaptation protocol BAP layer.

4. The method according to any one of claims 1 to 3, wherein the first MCG is only for transmitting an F1 interface control plane service, and the RLF indication information indicates that an RLF occurs on a node-granularity link between the first node and the second node.

5. The method according to claim 4, wherein that the RLF indication information indicates that an RLF occurs on a node-granularity link between the first node and the second node comprises:
the RLF indication information indicates that the RLF occurs on the node-granularity link between the first node and the second node and link recovery is performed.

6. The method according to any one of claims 1 to 3, wherein the first MCG is also for transmitting the F1 interface user plane service, and the RLF indication information comprises a first BAP address, a first routing identifier routing ID, or a first path identifier path ID.

7. The method according to claim 6, further comprising:
determining, by the first node, all paths that pass through the first node to a destination node are unavailable, wherein the RLF indication information comprises the first BAP address, and the first BAP address is a BAP address of the destination node;
determining, by the first node, a path of the first path ID is unavailable in all paths that pass through the first node to a destination node, wherein the RLF indication information comprises the first path ID; or
determining, by the first node, a path of the first routing ID is unavailable in all paths that pass through the first node to a destination node, wherein the RLF indication information comprises the first routing ID.

8. A communication method, wherein a first node is served by a first master cell group MCG and a first secondary cell group SCG, a child node of the first node is a second node, and the method comprises:
sending, by the first node, RLF indication information to the second node when the first MCG is for transmitting an F1 interface user plane service, and a radio link failure RLF occurs in the first MCG and link recovery is performed.

9. The method according to claim 8, wherein that the first MCG is for transmitting an F1 interface user plane service comprises:
the first MCG is for transmitting the F1 interface user plane service based on a backhaul adaptation protocol BAP layer.

10. The method according to claim 8 or 9, wherein the first SCG is only for transmitting an F1 interface control plane service, and the RLF indication information indicates that an RLF occurs on a node-granularity link between the first node and the second node.

11. The method according to claim 8 or 9, wherein the first SCG is also for transmitting the F1 interface user plane service, no RLF occurs in the first SCG, and the RLF indication information comprises a first BAP address, a first routing identifier routing ID, or a first path identifier path ID.

12. The method according to claim 11, further comprising:
determining, by the first node, all paths that pass through the first node to a destination node are unavailable, wherein the RLF indication information comprises the first BAP address, and the first BAP address is a BAP address of the destination node;
determining, by the first node, a path of the first path ID is unavailable in all paths that pass through the first node to a destination node, wherein the RLF indication information comprises the first path ID; or
determining, by the first node, a path of the first routing ID is unavailable in all paths that pass through the first node to a destination node, wherein the RLF indication information comprises the first routing ID.

13. A communication method, comprising: sending, by a first node, first RLF indication information to a second node when an RLF occurs on a backhaul link in a cell group that is of two cell groups and that is for transmitting an F1 interface user plane F 1-U service, or when an RLF occurs on a backhaul link in a cell group that is of two cell groups and that is for transmitting an F1-U service and link recovery is performed, or when an RLF occurs on a backhaul link in a cell group that is of two cell groups and that is configured to transmit an F1 interface service based on a backhaul adaptation protocol BAP layer, or when an RLF occurs on a backhaul link in a cell group that is of two cell groups and that is configured to transmit an F1 interface service based on a BAP and link recovery is performed, wherein the first node is served by the two cell groups, and a child node of the first node is the second node.

14. The method according to claim 13, wherein
the transmitting an F1 interface service based on a BAP layer comprises transmitting the F1-U service and/or an F1 interface control plane (F1-C) service based on the BAP layer.

15. A communication apparatus, wherein the communication apparatus is used as a first node, the first node is served by a first master cell group MCG and a first secondary cell group SCG, a child node of the first node is a second node, and the communication apparatus comprises:
a processing unit, configured to send RLF indication information to the second node through a transceiver unit when the first SCG is for transmitting an F 1 interface user plane service, no radio link failure RLF occurs in the first MCG, and an RLF occurs in the first SCG.

16. The apparatus according to claim 15, wherein that a processing unit is configured to send RLF indication information to the second node through a transceiver unit when the first SCG is for transmitting an F1 interface user plane service, no radio link failure RLF occurs in the first MCG, and an RLF occurs in the first SCG comprises:
the processing unit is configured to send an RLF indication to the second node through the transceiver unit when the first SCG is for transmitting the F 1 interface user plane service, no radio link failure RLF occurs in the first MCG, and the RLF occurs in the first SCG and link recovery is performed.

17. The apparatus according to claim 15 or 16, wherein that the first SCG is for transmitting an F1 interface user plane service comprises:
the first SCG is for transmitting the F1 interface user plane service based on a backhaul adaptation protocol BAP layer.

18. The apparatus according to any one of claims 15 to 17, wherein the first MCG is only for transmitting an F1 interface control plane service, and the RLF indication information indicates that an RLF occurs on a node-granularity link between the first node and the second node.

19. The apparatus according to claim 18, wherein that the RLF indication information indicates that an RLF occurs on a node-granularity link between the first node and the second node comprises:
the RLF indication information indicates that the RLF occurs on the node-granularity link between the first node and the second node and link recovery is performed.

20. The apparatus according to any one of claims 15 to 17, wherein the first MCG is also for transmitting the F1 interface user plane service, and the RLF indication information comprises a first BAP address, a first routing identifier routing ID, or a first path identifier path ID.

21. The apparatus according to claim 20, wherein
the processing unit is configured to determine that all paths that pass through the first node to a destination node are unavailable, wherein the RLF indication information comprises the first BAP address, and the first BAP address is a BAP address of the destination node;
the processing unit is configured to determine that a path of the first path ID is unavailable in all paths that pass through the first node to a destination node, wherein the RLF indication information comprises the first path ID; or
the processing unit is configured to determine that a path of the first routing ID is unavailable in all paths that pass through the first node to a destination node, wherein the RLF indication information comprises the first routing ID.

22. A communication apparatus, wherein the communication apparatus is used as a first node, the first node is served by a first master cell group MCG and a first secondary cell group SCG, a child node of the first node is a second node, and the communication apparatus comprises:
a processing unit, configured to send RLF indication information to the second node through a transceiver unit when the first MCG is for transmitting an F1 interface user plane service, and a radio link failure RLF occurs in the first MCG and link recovery is performed.

23. The apparatus according to claim 22, wherein that the first MCG is for transmitting an F1 interface user plane service comprises:
the first MCG is for transmitting the F1 interface user plane service based on a backhaul adaptation protocol BAP layer.

24. The apparatus according to claim 22 or 23, wherein the first SCG is only for transmitting an F1 interface control plane service, and the RLF indication information indicates that an RLF occurs on a node-granularity link between the first node and the second node.

25. The apparatus according to claim 22 or 23, wherein the first SCG is also for transmitting the F1 interface user plane service, no RLF occurs in the first SCG, and the RLF indication information comprises a first BAP address, a first routing identifier routing ID, or a first path identifier path ID.

26. The apparatus according to claim 25, wherein
the processing unit is configured to determine that all paths that pass through the first node to a destination node are unavailable, wherein the RLF indication information comprises the first BAP address, and the first BAP address is a BAP address of the destination node;
the processing unit is configured to determine that a path of the first path ID is unavailable in all paths that pass through the first node to a destination node, wherein the RLF indication information comprises the first path ID; or
the processing unit is configured to determine that a path of the first routing ID is unavailable in all paths that pass through the first node to a destination node, wherein the RLF indication information comprises the first routing ID.

27. A communication apparatus, wherein the communication apparatus is used as a first node, the first node is served by two cell groups, a child node of the first node is a second node, and the communication apparatus comprises:
a processing unit, configured to send first RLF indication information to the second node through a transceiver unit when an RLF occurs on a backhaul link in a cell group that is of the two cell groups and that is for transmitting an F1 interface user plane F1-U service, or when an RLF occurs on a backhaul link in a cell group that is of the two cell groups and that is for transmitting an F1-U service and link recovery is performed, or when an RLF occurs on a backhaul link in a cell group that is of the two cell groups and that is configured to transmit an F1 interface service based on a backhaul adaptation protocol BAP layer, or when an RLF occurs on a backhaul link in a cell group that is of the two cell groups and that is configured to transmit an F1 interface service based on a BAP and link recovery is performed.

28. The apparatus according to claim 27, wherein
the transmitting an F1 interface service based on a BAP layer comprises transmitting the FlU service and/or an F1 interface control plane (F1-C) service based on the BAP layer.

29. A communication apparatus, wherein the apparatus is configured to perform the method according to any one of claims 1 to 14.

30. A communication apparatus, comprising at least one processor and an interface, wherein the at least one processor is configured to invoke instructions from the interface and run the instructions, and when the at least one processor executes the instructions, the method according to any one of claims 1 to 14 is implemented.

31. A computer-readable storage medium, comprising computer instructions, wherein when the computer instructions are run on a first node, the first node is enabled to perform the method according to any one of claims 1 to 14.

32. A computer program product, wherein the computer program product comprises program instructions, and when the program instructions are executed by a processor, the method according to any one of claims 1 to 14 is implemented.
